(19)

**Europäisches Patentamt**
**European Patent Office**
**Office européen des brevets**

(11) **EP 4 431 842 A1**

(12) **EUROPEAN PATENT APPLICATION**

(43) Date of publication:
**18.09.2024 Bulletin 2024/38**

(51) International Patent Classification (IPC):
**F25B 15/02** *(2006.01)* **F25B 25/02** *(2006.01)*

(21) Application number: **23020142.8**

(52) Cooperative Patent Classification (CPC):
**F25B 15/02; F25B 25/02**

(22) Date of filing: **17.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Staicovici, Mihail-Dan**
**020072 Bucuresti (RO)**

(72) Inventor: **Staicovici, Mihail-Dan**
**020072 Bucuresti (RO)**

(54) **REFRIGERATION AND WORKING MOTHER AND FATHER HYBRID COMPRESSION PROCEDURE AND APPLYING PLANT**

(57) Procedure and applying plant, named generically Mother & Father Hybrid Compression (M&FHC), supplied by a heat / sink source of ambient temperature and used to produce refrigeration and working in industrial, agriculture, research or household, etc. applications, solving effectively the following technical problems:
• M&F cycle modifies gax-Osenbrück cycle for a correct operation introducing an Integral Mechanical Vapor Compression method, which ensures the most effective elimination of the gax absorption process excess heat to the external heat/sink source to produce useful refrigeration;
• M&F cycle is synergic coupled in a thermal cascade with a single-stage absorption refrigeration cycle in order to form a Refrigeration Mother & Father Hybrid Compression cycle, in short RM&FHC cycle;
• RM&FHC cycle is synergic coupled in a thermal cascade with a Rankine cycle, in order to form a Working Mother & Father Hybrid Compression cycle, in short WM&FHC cycle;
• M&F cycle is synergic coupled in a thermal cascade with a Rankine cycle, in order to form a Working Mother & Father cycle, in short WM&F cycle;
• Multi-effect working M&F cycle, in short MEWM&F cycle, uses a thermal cascade of M&F and Rankine cycles in such a way that the excess heat of a M&F cycle and the generation heat of the next M&F cycle constitute heat and sink sources of a Rankine cycle, respectively, while turbo-generation processes of all said cascade Rankine cycles produce cumulated and amplified external mechanical work, much higher than the internal compression work consumption;
• Heat Source Recovery Multi Effect Working Mother & Father cycle, in short HSRMEWM&F recovers partly or totally the excess heat rejected by its last M&F cycle of the cascade in order to supply with heat source, of a temperature sensibly equal to the ambient heat source temperature, the generation process of its first Rankine cycle of the cascade for increasing whole cycle efficiency.

Figure 2.

Processed by Luminess, 75001 PARIS (FR)

EP 4 431 842 A1

**Description**

The present invention refers to a procedure and to an applying plant, supplied by a heat / sink source of ambient temperature and used to produce refrigeration and working in industrial, agriculture, research or household, etc. applications.

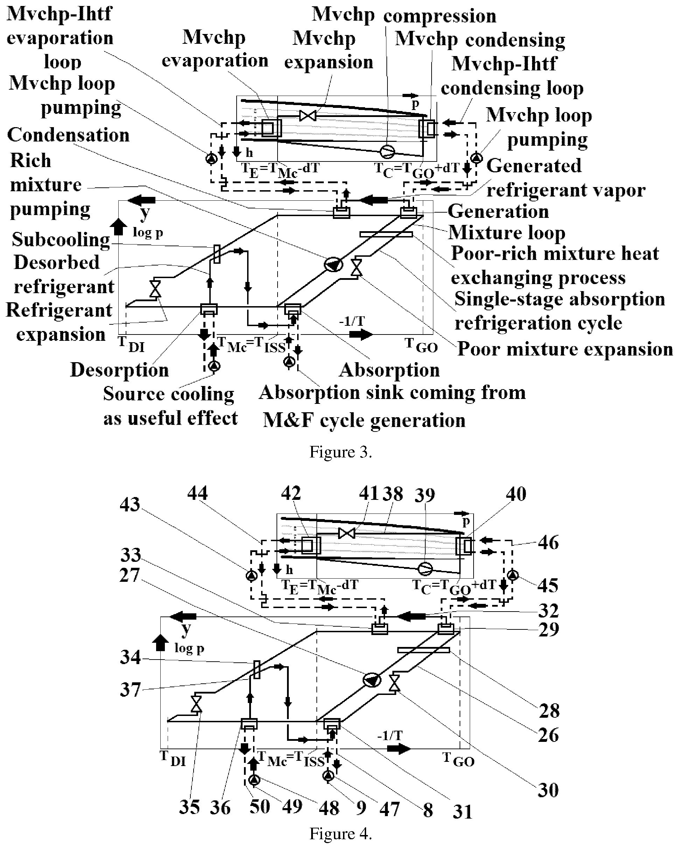

There are already known proposals to build plants which generate clean energy of refrigeration, heating, or working by using the ambient temperature heat / sink source. The technology is generically named "Mother and Father Hybrid Compression", in short M&FHC. Here we can mention e.g. the patent files of Staicovici M.-D., Mother and Father Hybrid Compression Plant for Refrigeration and Working, Sweden PRV-2100124-3 / 06 August 2021, or Staicovici M.-D., Mother And Father Hybrid Compression Plant For Working And Heating, European Patent EP 210 00 324 / 08 November 2021. The cited patent files base on the application of the Osenbrück refrigeration cycle provided with a Generator-Absorber heat exchange process, known as GAX, or, in short, gax-Osenbrück cycle. It has been patented by Altenkirch and Tenckhoff according to the absorption-generation heat exchange knowledge of times relegating back for more than 100 years, i.e. in 1911. Recently, it was described also in (Staicovici M. D., 2014, Coabsorbent and Thermal Recovery Compression Heat Pumping Technologies. Springer Verlag, 2014, page 143, Fig. 3.39). The applications consider that GAX internal heat exchange takes place between gax resorber and gax-desorber in such a way that the heat released by the gax-resorber equals the heat received by the gax-desorber. This point of view was accepted in all theoretical applications with gax-Osenbrück, including the cited patent files too. However, a recent thorough study and model done by the author of the present patent file showed that the gax-resorber capacity to release heat is considerably higher than the gax-desorber capacity to receive heat. The study has been accomplished with the help of the "Divided Device" method, elaborated by the author and published in the cited work (Staicovici, 2014). It has been also shown that the gax-resorber capacity to release excess heat sensibly equals the heat capacity of the desorber to receive heat. Bearing in mind the new results brought to light, it is concluded that the internal heat management of the gax-Osenbrück cycle is not presented completely and enough correct, so plants making the object of mentioned patent files have structural and operational deficiencies. Consequently, in order to continue the development of M&FHC technology, a further activity of eliminating these deficiencies and plants efficiency improvement is mandatory to be accomplished. This activity is constituting the technical problem which this invention is confronted with, presented next as six objectives. For the sake of simplicity and clarity, the new gax-Osenbrück is further named Mother & Father refrigeration cycle, in short *M&F* cycle. Its gax-resorber and gax-desorber will be named in this patent file gax-absorber and gax-generator, while the resorber and desorber will be named absorber and generator, respectively. With the new denominations, the gax heat exchange takes place between gax-generator and gax-absorber and the heat output of the gax-absorber takes place with an excess heat, which sensibly equals the generator heat input, as we shall show further when presenting the patent file procedure. The processes taking place in the gax-generator and gax-absorber will be named further gax-generation and gax-absorption processes, while those taking place in the generator and absorber are further named generation and absorption, respectively. The *GAX* benefits of a domain of Operation with Temperature Overlapping, in short OTO. This is the place where the gax-generator and gax-absorber exchange heat. It is noted by $\delta T_{gax} = [T_{Mh} + \delta T, T_{Mc} + \delta T]$, where $T_{Mh}$, $T_{Mc}$ and $\delta T$ hold for the external heat/sink source temperature, internal sink source temperature and a temperature pinch, respectively.

A *first* objective of the present invention is constituted by the finding of a procedure and of an applying plant as a technical solution capable to ensure the correct and efficient operation of a refrigeration cycle based on the gax-Osenbrück cycle and plant, named next "Mother & Father" cycle and cycle based plant, in short M&F cycle and plant, supplied by a source of ambient temperature.

A *second* objective of the present invention is constituted by the finding of a procedure and of an applying plant as a technical solution capable to ensure a correct and efficient operation of a refrigeration cycle and plant, based on the M&F cycle and plant, supplied by a source of ambient temperature and named Refrigeration Mother & Father Hybrid Compression cycle and cycle based plant, in short RM&FHC cycle and plant.

A *third* objective of the present invention is constituted by the finding of a procedure and of an applying plant as a technical solution capable to ensure a correct and efficient operation of a working cycle and plant, based on the RM&FHC cycle and plant, supplied by a source of ambient temperature and named Working Mother & Father Hybrid Compression cycle and cycle based plant, in short WM&FHC cycle and plant.

A *fourth* objective of the present invention is constituted by the finding of a procedure and of an applying plant as a technical solution capable to ensure a correct and simpler and efficient operation of a working cycle and plant based on the M&F cycle and plant, supplied by a source of ambient temperature and named Working Mother & Father cycle and cycle based plant, in short WM&F cycle and plant.

A *fifth* objective of the present invention is constituted by the finding of a procedure and of an applying plant as a technical solution capable to increase efficiency and working yield of the working WM&F cycle and plant, supplied by a source of ambient temperature and named Multi Effect Working Mother & Father cycle and cycle based plant, in short MEWM&F cycle and plant.

A *sixth* objective of the present invention is constituted by the finding of a procedure and of an applying plant as a technical solution capable to increase the thermal efficiency and feasibility of the working MEWM&F cycle and cycle based plant, for same working yield, in such a way that the resulting cycle and cycle based plant, named Heat Source Recovery Multi Effect Working Mother & Father cycle and cycle based plant, in short HSRMEWM&F cycle and plant, needs considerable less heat source supply of ambient temperature, comparatively.

The procedure solves the technical problem, according to the invention and to the *first* objective, in that the M&F cycle uses for gax-Osenbriick correct operation an Integral Mechanical Vapor Compression method, in short (IMVC), introduced in this patent file, which ensures the most effective elimination of the gax absorption process excess heat, $q_{gax-absorption}^{excess}$, to the external heat/sink source of $T_{Mh}$ temperature. According to this method, the excess heat capacity is divided in complementary parts between several mechanical vapor compression cooling cycles which are running with progressive higher evaporation temperatures between $T_{Mc}$ and $T_{Mh}$, $T_{Mc} < T_{Mh}$, and same condensing $T_{Mh}$ temperature. In this way, the generation process of the M&F cycle is enabled to produce useful refrigeration.

The procedure solves the technical problem, according to the invention and to the *second* objective, in that the M&F cycle is synergic coupled in a thermal cascade with a known single-stage absorption refrigeration cycle, in order to form together a Refrigeration Mother & Father Hybrid Compression cycle, in short RM&FHC. In this cascade, on one hand, the absorption cycle has as internal sink source, of $T_{Mc} - \delta T$ temperature, the M&F cycle generation process, which is extracting the absorption heat from said absorption cycle absorption processes and, on the other hand, a mechanical vapor compression cycle, provided or not with IMVC method, is extracting the condensing heat from said absorption cycle in order to supply with heat source the generation process of the absorption cycle and to enable the desorption process of the absorption cycle, characterized by the $T_{Dl}$ inlet temperature and the $T_{Dl} < T_{Mc} < T_{Mh}$ relationship with sources temperatures, take place and be used as refrigeration process of RM&FHC in external refrigeration applications.

The procedure solves the technical problem, according to the invention and to the *third* objective, in that the RM&FHC cycle is synergic coupled in a thermal cascade with a Rankine cycle, in order to form together a Working Mother & Father Hybrid Compression cycle, in short WM&FHC. In this cascade, on one hand, the condensing process of the Rankine cycle has as internal sink source, of $T_{Dl}$ temperature, $T_{Dl} < T_{Mc} < T_{Mh}$, the RM&FHC cycle desorption process, which is extracting the condensing heat from said Rankine cycle condensing process and, on the other hand, the generation process of the Rankine cycle is supplied externally by the heat/sink source of $T_{Mh}$ ambient temperature in order that the generated vapor is suffering the Rankine turbo-expansion-generation process, when it is producing useful work externally, higher than the work input of the WM&FHC cycle.

The procedure solves the technical problem, according to the invention and to the *fourth* objective,

in that the M&F cycle is synergic coupled in a thermal cascade with a Rankine cycle, in order to form together a Working Mother & Father cycle, in short WM&F. In this cascade, on one hand, the condensing process of the Rankine cycle has as internal sink source, of $T_{Mc} - \delta T$ temperature, the M&F cycle generation process, which is extracting the condensing heat from said Rankine cycle condensing process and, on the other hand, the generation process of the Rankine cycle is supplied externally by the heat/sink source of $T_{Mh}$ ambient temperature in order that the generated vapor is suffering a turbo-expansion process, when it is producing useful work externally, higher than the work input of the WM&F cycle.

The procedure solves the technical problem, according to the invention and to the *fifth* objective, in that the MEWM&F cycle uses a thermal cascade of M&F and Rankine cycles in such a way that the excess heat $q_{gax-absorption}^{excess}$ of a M&F cycle and the $q_{generation}$ heat of the next M&F cycle constitute heat and sink sources of a Rankine cycle, respectively, while turbo-generation processes of all said cascade Rankine cycles produce cumulated and amplified external mechanical work, higher than the compression work consumed by MEWM&F cycle operation and by IMVC method to eliminate $q_{gax-absorption}^{excess}$ heat of the last M&F cycle to the heat/sink external source of ambient temperature $T_{Mh}$.

The procedure solves the technical problem, according to the invention and to the *sixth* objective, in that the HSRMEWM&F cycle recovers partly or totally the $q_{gax-absorption}^{excess}$ heat rejected by its last M&F cycle of the cascade in order to supply with heat source, of a temperature sensible equal to the ambient heat source temperature, the generation process of its first Rankine cycle of the cascade.

The applying plant solves the technical problem, according to the invention and to the *first* objective, in that the M&F plant uses for gax-Osenbrück correct operation an IMVC method, which ensures the most effective elimination of the gax absorber excess heat to the external heat/sink source of $T_{Mh}$ temperature. According to this method, the excess heat capacity, $q_{gax-absorption}^{excess}$ , is divided in complementary parts between several mechanical vapor compression cooling plants which are running with progressive higher evaporator temperatures between $T_{Mc}$ and $T_{Mh}$, $T_{Mc} < T_{Mh}$, and same condenser $T_{Mh}$ temperature. In this way, the generator of the M&F plant is enabled to produce useful refrigeration.

The applying plant solves the technical problem, according to the invention and to the *second* objective, in that the M&F cycle is synergic coupled in a thermal cascade with a single-stage absorption refrigeration plant, in order to form together a Refrigeration Mother & Father Hybrid Compression plant, in short RM&FHC. In this cascade, on one hand, the absorption plant has as internal sink source, of $T_{Mc} - \delta T$ temperature, the M&F plant generator, which is extracting the absorber heat from said absorption plant absorber, and, on the other hand, a mechanical vapor compression plant, provided or not with IMVC method, is extracting the condenser heat from said absorption plant in order to supply with heat source the generator of the absorption cycle and to enable the desorber of the absorption plant, characterized by the $T_{DI}$ inlet temperature and the $T_{DI} < T_{Mc} < T_{Mh}$ relationship with sources temperatures, to operate and be used as refrigeration device of M&FHCR in external refrigeration applications.

The applying plant solves the technical problem, according to the invention and to the *third* objective, in that the RM&FHC plant is synergic coupled in a thermal cascade with a Rankine plant, in order to form together a Working Mother & Father Hybrid Compression plant, in short WM&FHC. In this cascade, on one hand, the condenser of the Rankine plant has as internal sink source, of $T_{DI}$ temperature, $T_{DI} < T_{Mc} < T_{Mh}$, the RM&FHC plant desorber, which is extracting the condenser heat from said Rankine plant condenser and, on the other hand, the generator of the Rankine cycle is supplied externally by the heat/sink source of $T_{Mh}$ ambient temperature in order that the generated vapor is suffering the expansion process in the Rankine turbo-generator, when it is producing useful work externally, higher than the work input of the WM&FHC cycle. The applying plant solves the technical problem, according to the invention and to the *fourth* objective, in that the M&F cycle is synergic coupled in a thermal cascade with a Rankine plant, in order to form together a Working Mother & Father cycle, in short WM&F. In this cascade, on one hand, the condenser of the Rankine plant has as internal sink source, of $T_{Mc} - \delta T$ temperature, the M&F plant generator, which is extracting the condensing heat from said Rankine plant condenser and, on the other hand, the generator of the Rankine cycle is supplied externally by the heat/sink source of $T_{Mh}$ ambient temperature in order that the generated vapor is suffering the expansion in the Rankine turbo-generator, when it is producing useful work externally, higher than the work input of the WM&F plant.

The applying plant solves the technical problem, according to the invention and to the *fifth* objective, in that the MEWM&F plant uses a thermal cascade of M&F and Rankine plants in such a way that the excess heat $q_{gax-absorption}^{excess}$ of a M&F plant and the $q_{generation}$ heat of the next M&F plant constitute heat and sink sources of a Rankine plant, respectively, while turbo-generators of all said cascade Rankine plants produce cumulated and amplified external mechanical work, higher than the compression work consumed by MEWM&F plant operation and by IMVC method cooling plants to eliminate final $q_{gax-absorption}^{excess}$ .

The applying plant solves the technical problem, according to the invention and to the *sixth* objective, in that the HSRMEWM&F plant recovers partly or totally the $q_{gax-absorption}^{excess}$ heat rejected by its last M&F plant of the cascade in order to supply with heat source, of a temperature sensible equal to the ambient heat source temperature, the generator of its first Rankine plant of the cascade

The advantages offered by the invention are the followings:

-   M&F plant is capable to ensure the correct and efficient operation of a refrigeration cycle based on the gax- Osenbriick cycle and plant;
-   M&F and RM&FHC plants have the highest COP of refrigeration and the lowest discharge gas temperature for same application;
-   HSRMEWM&F, WM&FHC and WM&F plants can be applied 24 hours/day and 365 day/year, practically in all regions of the world, producing feasible mechanical work or electricity through the use of the ambient source as heat source, therefore contributing potentially to planet environment temperature decrease, i.e. reducing planet global warming.

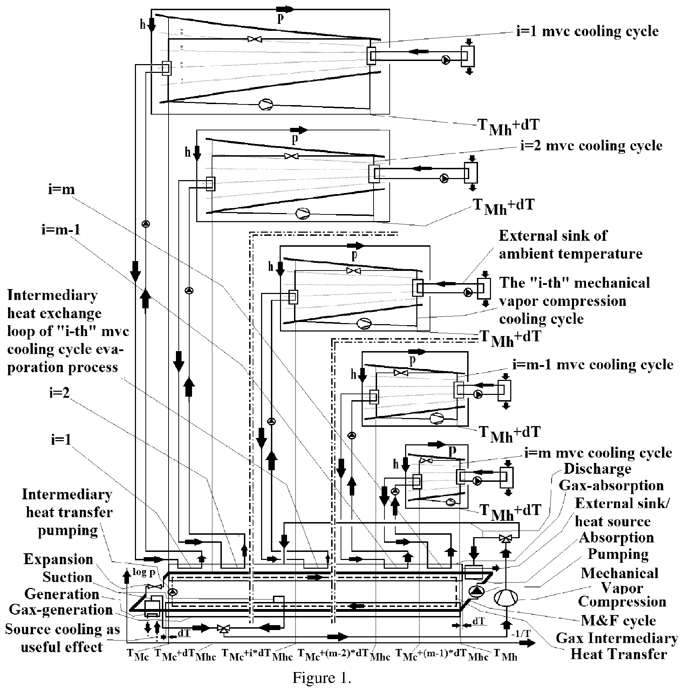

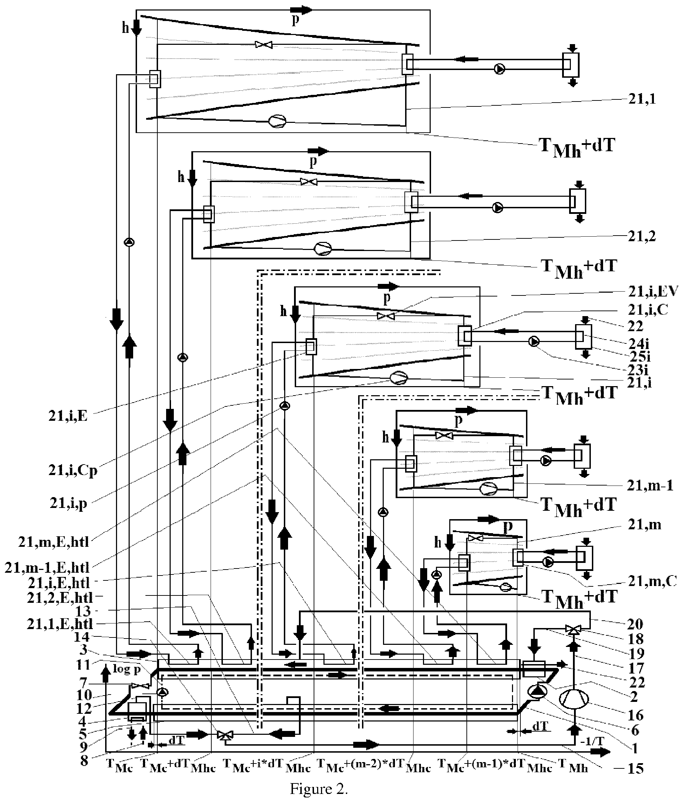

Next, it is given an example of the invention achievement, in conjuncture with Figure 1, Figure 2,

-   Figure 1. Schematic of M&F procedure.
-   Figure 2. Schematic of M&F plant.

- Figure 3. Schematic of RM&FHC procedure.
- Figure 4. Schematic of RM&FHC plant.
- Figure 5. Schematic of WM&FHC procedure.
- Figure 6. Schematic of WM&FHC plant.
- Figure 7. Schematic of WM&F procedure.
- Figure 8. Schematic of WM&F plant.
- Figure 9. Schematic of MEWM&F procedure.
- Figure 10. Schematic of MEWM&F plant.
- Figure 11. Schematic of HSRMEWM&F procedure.
- Figure 12. Schematic of HSRMEWM&F plant.
- Figure 13a. RM&FHC 1st application.
- Figure 13b. WM&FHC 1st application.
- Figure 14a. RM&FHC 2nd application.
- Figure 14b. WM&FHC 2nd application.
- Figure 15a. RM&FHC 3rd application.
- Figure 15b. WM&FHC 3rd application.
- Figure 16a. WM&F 1st application.
- Figure 16b. WM&F 2nd application.
- Figure 17a. MEWM&F specific net work output.
- Figure 17b. MEWM&F efficiency with respect to work input.
- Figure 17c. MEWM&F efficiency with respect to heat input.
- Figure 18. HSRMEWM&F efficiency in operation with heat source recovery.

The achievement procedure, according to invention and *first* objective, is shown in the example of Figure 1. Here, the M&F cycle is operated for instance by ammonia-water working pair and is plotted in the log p -1/T diagram in bold line. This working pair was chosen because it benefits of complete solubility field within the ambient temperature variation domain met in all geographic area on Earth and where the M&F cycle is supposed to be operated. The M&F cycle of Figure 1 is including the serially connected isobar processes of high-pressure absorption and gax-absorption, on one hand, and isobar low-pressure generation and gax-generation, on the other hand. The two first processes are separated by the two last processes by pumping and expansion processes, respectively, shown as well in Figure 1. The vapor generated during the generation process is produced by the external heating of a source to be usefully refrigerated, shown in Figure 1. The vapor generated by the gax-generation process is done by recovering the $\left|q_{gax-absorption}^{generation}\right|$ heat from gax-absorption process, equal to the $q_{gax-generation}$ heat. The $\left|q_{gax-absorption}^{generation}\right|$ heat is eliminated and transferred by the gax-absorption process to the gax-generation process by means of an intermediary heat transfer process performed with the help of a fluid with pumping forced circulation, indicated in the Figure 1 by a dashed line closed loop. The absorption process heat is eliminated to the external sink/heat source. The vapor generated by the generator and gax-generator processes suffer successively a mechanical vapor compression process noted in Figure 1 by suction, mechanical vapor compression and discharge to absorption and gax-absorption processes. The $q_{gax-absorption}^{excess}$ heat must be eliminated at the same time with its generation in order that the gax-absorption process takes place in the physical correct way. Moreover, its elimination to the external sink/heat ambient temperature source simultaneously with its generation and with the most reduced consumption of compression mechanical work are the main tasks to be accomplished by the M&F cycle in order that our most important final goal be achieved, i.e. to produce useful external working when consuming just ambient temperature heat source. According to the achievement procedure, the M&F cycle uses for gax-Osenbrück correct operation the IMVC method, as mentioned, depicted schematically in the upper part of Figure 1. The OTO domain subtends the temperature interval mentioned already, $\delta T_{gax} = [T_{Mh} + \delta T, T_{Mc} + \delta T]$, $T_{Mc} < T_{Mh}$, shown in Figure 1. This interval has been divided in "m", $m \in N$, temperature subintervals, $dT_{Mhc}$, which, for the sake of a simpler presentation, are considered equal, $T_{Mc} < T_{Mc} + dT_{Mhc} < , ..., < T_{Mc} + i * dT_{Mhc} < , ..., < T_{Mc} + (m - 2) * dT_{Mhc}, < T_{Mc} + (m - 1) * dT_{Mhc} < T_{Mh}$. The tabular temperature difference $dT_{Mhc}$ equals:

$$dT_{Mhc} = \frac{T_{Mh} - T_{Mc}}{m}$$

The temperature subintervals are shown to the bottom of Figure 1. During the gax-absorption operation, the excess heat is generated in each "*i*", subinterval, *i* = 1, 2, ..., *m*, mentioned prior. The amount of every subinterval excess heat is known by model and/or tests. Its elimination is done by the use of a known mechanical vapor compression cooling cycle in each subinterval, in short mvc, in such a way that theirs evaporation processes operate at increasing evaporation temperature, $T_{Mc} + i * dT_{Mhc} < T_{Mc} + (i + 1) * dT_{Mhc}$, *i* = 0,1, 2, ..., *m* - 1, but all mvc cooling cycles have the same condensing temperature, sensibly equal to the external sink/heat ambient temperature, i.e. $T_{Mh} + \delta T$. The mvc cooling cycles are plotted in the *p* - *h* diagram and are noted in Figure 1 by "*i - th mvc cooling cycle*", while the evaporation processes are provided with intermediary heat exchange loops processes, *i* = 1, 2, ..., m. The condensing processes are connected to external sink of ambient temperature, as shown for all i = 1, 2, ..., *m* mvc cooling cycles. The M&F heat balance is given by:

$$q_{generation} + q_{gax-generation} + \left|W_{pump}\right| + \left|w_{compress}\right| = \left|q_{absorption}\right| + \left|q_{gax-absorption}\right|$$

Equation (1)

From left to right, the symbols used in Equation (1) hold for generation heat, gax-generation heat, pump work, compression work, absorption heat and gax-absorption heat, respectively. In Equation (1), the pump work is very small and will be neglected, $\left|W_{pump}\right| \cong 0$. Also, the $\left|q_{absorption}\right|$ heat is 2-3 orders of magnitude smaller as compared to gax-absorption and gax-generation heats, so it will be neglected, as well, $\left|q_{absorption}\right| \cong 0$. Additionally, the gax-absorption heat has two complementary components, noted by Equation (2):

$$\left|q_{gax-absorption}\right| = \left|q_{gax-absorption}^{generation}\right| + \left|q_{gax-absorption}^{excess}\right|$$

Equation (2)

The first and second terms of Equation (2) right hand equal the $q_{gax-generation}$ heat,

$$\left|q_{gax-absorption}^{generation}\right| = q_{gax-generation}$$

Equation (3)

and the gax-absorption excess heat, respectively. The increase of the $\left|q_{gax-absorption}\right|$ heat over that of $q_{gax-generation}$, shown by Equations (2) and (3), is the consequence of the generated vapor compression to a higher pressure of absorption as compared to that of generation and compression work input.

The ideal minimum compression work consumption is obtained by the use of an infinite number of mvc cooling cycles, $m \to \infty$,

$$\left|W_{c,Carnot}\right| = \left|q_{gax-absorption}^{excess}\right| COP_{IMVC}^{-1}$$

Equation (4a)

In Equation (4a) $COP_{IMVC}$ is the ideal global coefficient of performance of the IMVC method:

$$COP_{IMVC} = \left(\frac{T_{Mh}}{T_{Mh} - T_{Mc}} ln \frac{T_{Mh}}{T_{Mc}} - 1\right)^{-1}$$

Equation (5)

However, in practice, this number must be limited. In this patent file applications we considered *m* = 6 mvc cooling cycles would be enough to ensure close to ideal minimum compression work consumption.

Also, real operation requires $COP_{IMVC}$ be altered by the exergy efficiency $\eta_{ex}$ of the IMVC process, so Equation (4a) becomes Equation (4b):

$$\left|W_{c,Carnot,real}\right| = \left|q_{gax-absorption}^{excess}/m\right| (\eta_{ex} COP_{IMVC})^{-1}$$

Equation (4b)

Further, bearing in mind assumptions made and Equations (2) and (3), it results that generation heat equals the excess heat of gax-absorption process, with satisfactory accuracy:

$$q_{generation} \cong \left| q_{gax-absorption}^{excess} \right| \qquad \text{Equation (6)}$$

Further, with Equation (6), Equation (4b) of the real minimum compression work consumption is re-written by:

$$\left| W_{c,Carnot} \right| \cong q_{generation} (\eta_{ex} COP_{IMVC})^{-1} \qquad \text{Equation (7)}$$

The achievement procedure, according to invention and *first* objective, shown in the example of Figure 1, is characterized by the following operation steps: i) start-up of the pumping process in the cycle plotted in bold, in order to activate the cycle main processes, generation, gax-generation, absorption and gax-absorption; ii) the generation process is supplied by external heating; iii) the mvc process is started in order to activate the suction of vapor generated by the generation processes and the discharge of vapor to the absorption processes; iv) at the same time, the heat exchange between gax-absorption and gax-generation processes is enabled by running the intermediary gax heat exchange process; v) the excess heat generated by the gax-absorption process is eliminated in real time using the train of mvc cooling cycles provided by the IMVC method.

The M&F applying plant 1, given in the achievement example of Figure 2, according to invention and *first* objective, is including the serially connected devices of isobar high-pressure absorber 2 and gax-absorber 3, on one hand, and isobar low-pressure generator 4 and gax-generator 5, on the other hand. The two first devices are separated by the two last devices by the pump 6 and expansion valve 7, respectively. The vapor generated by the generator 4 is produced by the external heating of a source to be usefully refrigerated 8, 9. The vapor yield of the gax-generator 5 is generated by recovering the $\left| q_{gax-absorption}^{generation} \right|$ heat from gax-absorber 3, equal to the gax-generator 5 heat, $q_{gax-generation}$. This heat is eliminated and transferred from the gax-absorber 3 to the gax-generator 5 by means of an Intermediary Heat Transfer Fluid, in short IHTF, circulated by pump 10 in the dashed line closed loop 11. The vapor generated by the generator 4 and gax-generator 5 suffer successively a mechanical vapor compression process with the help of the suction line made up of pipe 12, pipe 13, both connected with the regulating 3-way valve 14 and pipe 15, a mechanical vapor compressor 16 and a discharge line supplying the absorber 2 and gax-absorber 3, with the help of the pipe 17, 3-way regulating 18, pipe 19 and pipe 20. The $q_{gax-absorption}^{excess}$ heat is eliminated during its generation applying the IMVC method. It consists in dividing first the OTO domain in "m", $m \in N$, temperature subintervals, indicated to the bottom of Figure 2. Then, the excess heat generated is eliminated using a mechanical vapor compression cooling plant 21i, in short mvc plant 21i, in each "*i*" temperature subinterval, $i = 1, 2, ..., m$. Each mvc plant 21,i is single-stage according to the structure shown as example in Figure 2 and has similar known components serially connected, compressor 21,i,Cp, condenser 21,i,C, expansion valve 21,i,EV and evaporator 21,i,E, $i = 1, 2, ..., m$. The evaporator 21,i,E is extracting the excess heat from the "*i - th*" temperature subinterval by means of an IHTF circulated with the help of a pump 21,i,p in a heat transfer closed loop 21,i,E,htl, $i = 1, 2, ..., m$. The evaporators 21,i,E, $i = 1, 2, ..., m$, operate at increasing evaporation temperature, $T_{Mc} + i * dT_{Mhc} < T_{Mc} + (i + 1) * dT_{Mhc}$, $i = 0,1, 2, ..., m - 1$, but theirs condensers 21,i,C, $i = 1, 2, ..., m$, have the same condensing temperature, sensibly equal to the external sink/heat ambient temperature, i.e. $T_{Mh} + \delta T$. The condensers 21,i,C reject the condensing heat to the external sink source of ambient temperature 22 with the help of an IHTF circulated by means of a pump 23i in a closed loop 24i and a heat exchanger 25i, connected to the sink source 22, $i = 1, 2, ..., m$. The M&F applying plant, according to invention and *first* objective, shown in the example of Figure 2, is characterized by the following operation steps: i) start-up of the pump 6 in order to activate the plant main devices, generator 4, gax-generator 5, absorber 2 and gax-absorber 3; ii) the generator 4 is supplied by external heating of source 8-9 to be usefully refrigerated; iii) the compressor 16 is started in order to activate the suction of vapor generated by the generator 4 and gax-generator 5 and the discharge of vapor to the absorber 2 and gax-absorber 3; iv) at the same time, the heat exchange between gax-absorber 3 and gax-generator 5 is enabled by means of the intermediary gax heat exchange loop 11 running with IHTF pump 10; v) the excess heat generated by the gax-absorber 3 is eliminated in real time using the train of mvc cooling plants 21,i, $i = 1, 2, ..., m$, according to IMVC method.

The achievement procedure, according to invention and *second* objective is shown in the example of Figure 3. This is solving the technical problem in that the M&F cycle is synergic coupled in a thermal cascade with a known single-stage absorption refrigeration cycle, in short ssar cycle, in order to form together a Refrigeration Mother & Father Hybrid Compression cycle, in short RM&FHC. Next, the absorption refrigeration cycle is described in short for the sake of exposure clearness and completeness. The absorption cycle is represented in the log p-1/T diagram and is supposed to operate with ammonia-water working pair, as well. To the right side, the cycle has a refrigerant-absorbent mixture closed loop which is covering serially connected processes, of rich mixture pumping, secondary poor-rich mixture heat exchange, high-pressure vapor generation, primary poor-rich mixture heat exchange, poor mixture expansion and low-pressure absorption, to close the loop. To the left side, the generated refrigerant vapor suffer subsequently a series of processes, high-pressure condensation, liquid refrigerant sub-cooling and expansion, when it becomes low-pressure liquid refrigerant and desorption of expanded refrigerant, in order to produce the useful refrigeration effect. Finally, the desorbed refrigerant vapor is heated in a recovering way during the sub-cooling process and is suffering the low-pressure absorption process, to close the ssar cycle. The ssar cycle generation outlet temperature is $T_{GO}$, as Figure 3 shows. This is chosen in such a way that the mean generated vapor concentration, $Y_{Gm}$, is higher than a refrigerant vapor concentration considered minimum and enough high to fulfill effectively required refrigeration processes applications, without to need rectification. For this patent file, in case of the ammonia-water working pair choice the generation outlet temperature must be $T_{GO} \leq -3.625°C$, $T_{GO} < T_{Mh}$, in order that the mean generated vapor concentration be $Y_{Gm} \geq 0.998$. Because our system is bi-variant, the internal sink source and the desorption process inlet temperatures result as $T_{Mc}$ = $T_{ISS} \leq -44.4°C$ and $T_{DI} = -75°C$, respectively, shown in Figure 3 as well. The connection of the ssar cycle with sources follows next. The supply of the generation process with heat source is provided by a known Mechanical Vapor Compression Heat Pump cycle, in short mvchp, supposed to be operated by ammonia and plotted in the $p - h$ diagram on top of Figure 3. The mvchp cycle includes serially connected processes, mvchp compression, mvchp condensing, mvchp expansion and mvchp evaporation. The mvchp evaporation extracts the heat released by the ssar condensation process at $T_E = T_{Mc} - \delta T$ and upgrades it till generation outlet temperature of ssar cycle level, $T_C = T_{GO} + \delta T$. The mvchp evaporation heat extraction from ssar cycle condensation and mvchp condensation heat release to ssar cycle generation are done with the help of an intermediary heat transfer fluid circulated by pumpimg processes in closed loops, as noted and shown in Figure 3. Further, continuing with ssar cycle connections with sources, the absorption process releases heat using the sink coming from the M&F generation process and the desorption process is providing cooling to an external source, as useful effect, both processes shown schematically by Figure 3. In conclusion, the achievement procedure, according to invention and *second* objective, shown in the example of Figure 3, is characterized by the following operation steps: i) activate M&F cycle; ii) activate pumping in the mixture loop of ssar cycle; iii) activate full start-up operation of the M&F cycle, in order to provide ssar cycle absorption process with sink source; iv) full activation of the mvchp cycle operation in order to ensure ssar cycle condensation sink source and ssar cycle generation heat source; 2v) provide ssar cycle desorption with an external source to be refrigerated as RM&FHC cycle useful effect.

The achievement plant, according to invention and *second* objective is shown in the example of Figure 4. This is solving the technical problem in that the M&F plant is synergic coupled in a thermal cascade with a known single-stage absorption refrigeration plant, in short ssar plant, in order to form together a Refrigeration Mother & Father Hybrid Compression plant, in short RM&FHC. Next, the ssar plant is described in short for the sake of exposure clearness and completeness. The ssar plant is represented in the log p-1/T diagram and is supposed to operate with ammonia-water working pair, as well. To the right side, the ssar plant has a refrigerant-absorbent mixture closed loop 26 which is covering serially connected devices, of rich mixture pump 27, secondary poor-rich mixture heat exchanger 28, high-pressure vapor generator 29, primary poor-rich mixture heat exchanger 28, poor mixture expansion valve 30 and low-pressure absorber 31, to close the loop. To the ssar plant left side, the generated refrigerant vapor 32 cover subsequently a series of devices, high-pressure condenser 33, liquid refrigerant sub-cooler 34 and expansion valve 35, when it becomes low-pressure sub-cooled liquid refrigerant and is desorbed in the low-pressure desorber 36, in order to produce the useful refrigeration effect. Finally, the desorbed refrigerant vapor 37 is superheated in a recovering way in the refrigerant sub-cooler 34 and is absorbed in the low-pressure absorber 31, to close the ssar plant. The connection of the ssar plant with sources follows next. The supply of the high-pressure vapor generator 29 with heat source is provided by a mechanical vapor compression heat pump plant, in short mvchp plant 38, supposed to be operated by ammonia and plotted in the $p - h$ diagram on top of Figure 3. The mvchp plant includes serially connected devices, mvchp compressor 39, mvchp high-pressure condenser 40, mvchp expansion valve 41 and mvchp low-pressure evaporator 42. The mvchp low-pressure evaporator 42 extracts the heat released by the ssar high-pressure condenser 33 and upgrades it with condenser 40 till high-pressure generator 29 outlet temperature of ssar plant. The mvchp evaporator 42 extracts heat from ssar plant condenser 33 with the help of an intermediary heat transfer fluid circulated by pump 43 in the closed loop 44 and the condenser 40 is supplying generator 29 with the help of another intermediary heat transfer fluid, circulated by pump 45 in the closed loop 46. The ssar low-pressure absorber 31 releases heat with the help of the sink coming from M&F generator 4 using an intermediary heat transfer fluid circulated by pump 47 in a closed loop having generator 4 pipe 8 tour and pipe 9 retour. The ssar plant low-pressure desorber 36 provides externally the useful refrigeration effect making use of an intermediary heat transfer fluid circulated by pump 48 in the closed loop having pipe 49 as tour and pipe 50 as retour. In conclusion, the achievement plant, according to invention and *second* objective, shown in the example of Figure 4, is characterized by the following operation steps: i) activate M&F plant; ii) activate pump 27 in the mixture loop of ssar plant; iii) activate full start-up operation of the M&F plant, in order to provide ssar plant absorber 31 with sink source; iv) full activation of the mvchp plant operation in order to provide ssar plant condenser 33 with sink source and generator 29 with heat source; v) provide ssar plant desorber 36 with external source to be refrigerated as RM&FHC plant useful effect.

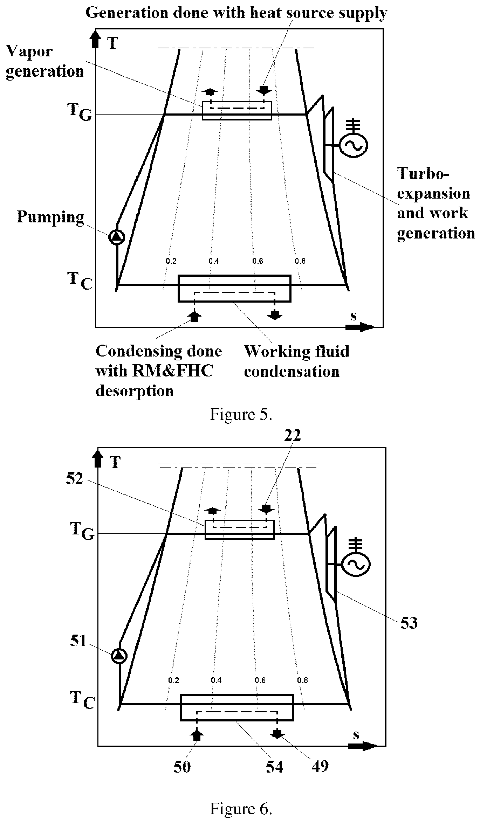

The achievement cycle, according to invention and *third* objective is shown in the example of Figure 5. This is solving the technical problem in that the Refrigeration Mother & Father Hybrid Compression cycle, in short RM&FHC cycle, is synergic coupled in a thermal cascade with a Rankine cycle, in order to form together a Working Mother & Father Hybrid Compression cycle, in short WM&FHC cycle. Next, the Rankine cycle is described in short for the sake of exposure clearness and completeness. The Rankine cycle is represented in the T-s diagram and is supposed to operate with ammonia working fluid. In the known Rankine cycle, the working fluid is covering a closed loop with serially connected processes, pumping, high-pressure vapor generation, turbo-expansion and work generation, named shorter turbo-generation, and low-pressure condensing of working fluid, to close the loop. In this cascade, on one hand the low-pressure condensing is done with RM&FHC desorption process, which extracts at $T_{DI} = T_C - \delta T$ temperature, $T_{DI} < T_{Mc} < T_{Mh}$, the Rankine condensing heat with the help of an intermediary heat transfer fluid circulated in a closed loop provided with pumping process between desorption and condensing processes and on the other hand the high-pressure generation is done by heat supply of ambient source at $T_G = T_{Mh} - \delta T$ temperature, in order that the generated vapor is suffering a turbo-expansion process and external work generation, higher than the work input of the WM&FHC cycle. In conclusion, the achievement procedure, according to invention and *third* objective, shown in the example of Figure 5, is characterized by the following simultaneous operation steps: i) activate M&F cycle; ii) activate refrigerant pumping in the Rankine cycle loop; iii) activate full start-up operation of the RM&FHC cycle, in order to provide Rankine cycle with condensing sink source; iv) supply Rankine generation with ambient heat source in order to generate positive external work of WM&FHC cycle with the help of its turbo-generation process.

The achievement plant, according to invention and *third* objective is shown in the example of Figure 6. This is solving the technical problem in that the Refrigeration Mother & Father Hybrid Compression plant, in short RM&FHC plant, is synergic coupled in a thermal cascade with a Rankine plant, in order to form together a Working Mother & Father Hybrid Compression plant, in short WM&FHC plant. Next, the Rankine plant is described in short for the sake of exposure clearness and completeness. The Rankine plant is represented in the T-s diagram and is supposed to operate with ammonia working fluid. In the known Rankine plant, the working fluid is covering a closed loop with serially connected devices, pump 51, high-pressure vapor generator 52, turbo-expander and work generator 53, named shorter as turbo-generator 53 and low-pressure condenser 54 of working fluid, to close the loop. In this cascade, the condensing of the low-pressure condenser 54 is done with RM&FHC desorber 36, which extracts at $T_{DI} = T_C - \delta T$ temperature, $T_{DI} < T_{Mc} < T_{Mh}$, the Rankine condensing heat with the help of a closed loop provided with an intermediary heat transfer fluid circulated by a pump 48 and covering on one hand pipe 50, which is desorber 36 tour pipe and condenser 54 return pipe and on the other hand pipe 49 which is desorber 36 return pipe and condenser 54 tour pipe, in order to close the loop. Also, in this cascade, the high-pressure generator 52 is supplied by external ambient heat 22 at $T_G = T_{Mh} - \delta T$ temperature, in order to generate vapor, which subsequently is expanded in turbo-generator 53 to produce external work, higher than the work input of the WM&FHC cycle. In conclusion, the achievement plant, according to invention and *third* objective, shown in the example of Figure 6, is characterized by the following simultaneous operation steps: i) activate M&F cycle; ii) activate refrigerant pump 48 in the Rankine cycle loop; iii) activate full start-up operation of the RM&FHC plant in order to provide Rankine condenser 54 with sink source; iv) supply Rankine generator 52 with ambient heat source 22 in order to generate vapor which produce positive external work in turbo-generator 53 of WM&FHC plant.

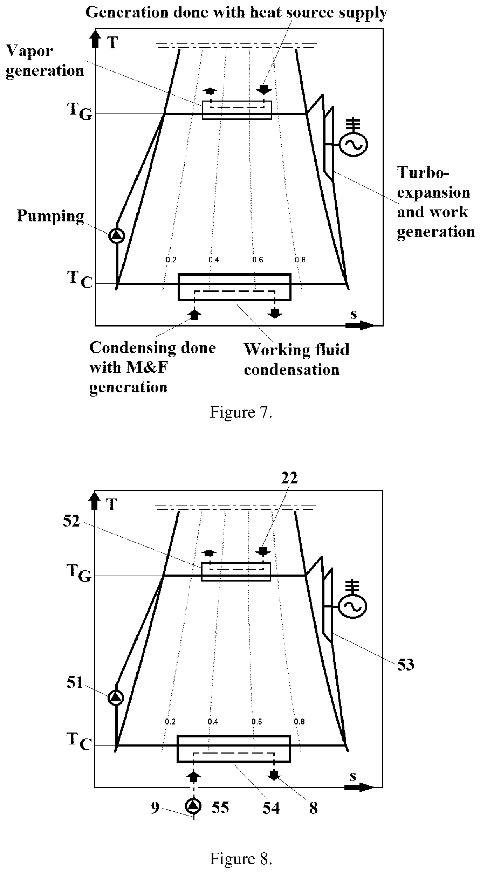

The procedure solves the technical problem, according to the invention and to the *fourth* objective,

in that the M&F cycle is synergic coupled in a thermal cascade with a Rankine cycle, in order to form together a Working Mother & Father cycle, in short WM&F. Both M&F and Rankine cycles have been shown prior and described in Figure 1 and Figure 5, respectively. The only modification appears in their thermal cascade. Indeed, on one hand, Figure 7 shows the new thermal coupling of Rankine cycle, where it has as internal sink source, of $T_{Mc} - \delta T$ temperature, the M&F cycle generation process, which is extracting the condensing heat of said Rankine cycle condensing process. However, on the other hand, Figure 7 shows again, as in Figure 5, the generation process of Rankine cycle is supplied externally by the heat/sink source of $T_{Mh}$ ambient temperature in order that the generated vapor is suffering a turbo-expansion process, when it is producing useful work externally, higher than the work input of the WM&F cycle. In conclusion, the procedure, according to invention and *fourth* objective, shown in the example of Figure 7, is characterized by the following simultaneous operation steps: i) activate M&F cycle in order to provide Rankine condensing process with internal sink source; ii) supply Rankine generation process with ambient heat source in order to generate vapor which produce positive external work when covering the turbo-generation process of WM&F cycle.

The applying plant solves the technical problem, according to the invention and to the *fourth* objective, in that the M&F plant is synergic coupled in a thermal cascade with a Rankine plant, in order to form together a Working Mother & Father plant, in short WM&F plant. Both M&F and Rankine plants have been shown prior and described in Figure 2 and Figure 6, respectively. The only modification appears in their thermal cascade. Indeed, on one hand, Figure 8 shows the Rankine plant where the working fluid is covering a closed loop with serially connected devices, pump 51, high-pressure vapor generator 52, turbo-expander and work generator 53, named shorter as turbo-generator 53 and low-pressure condenser 54 of working fluid, to close the loop. In this cascade, the working fluid condensing in the low-pressure condenser 54 is done with M&F generator 4, which extracts at $T_C = T_{Mc} - \delta T$ temperature the Rankine condensing heat with the help of an intermediary heat transfer fluid circulated by a pump 55 in a closed loop made up of tour pipe 8 and retour 9 of condenser 54 and tour 9 and retour 8 of generator 4. On the other hand, Figure 8 shows in this cascade the high-pressure generator 52 is supplied by external ambient heat 22 at $T_G = T_{Mh} - \delta T$ temperature. in order that the generated vapor enters turbo-generator 53 to produce external work, higher than the work input of the WM&F plant. In conclusion, the achievement plant, according to invention and *fourth* objective, shown in the example of Figure 8, is characterized by the following simultaneous operation steps: i) activate M&F plant; ii) activate refrigerant pump 48 in the Rankine plant loop; iii) activate full start-up operation of RM&F plant, in order to provide Rankine condenser 54 with sink source; iv) supply Rankine generator 52 with ambient heat source 22 in order to generate vapor which produce positive external work in turbo-generator 53 of WM&F plant.

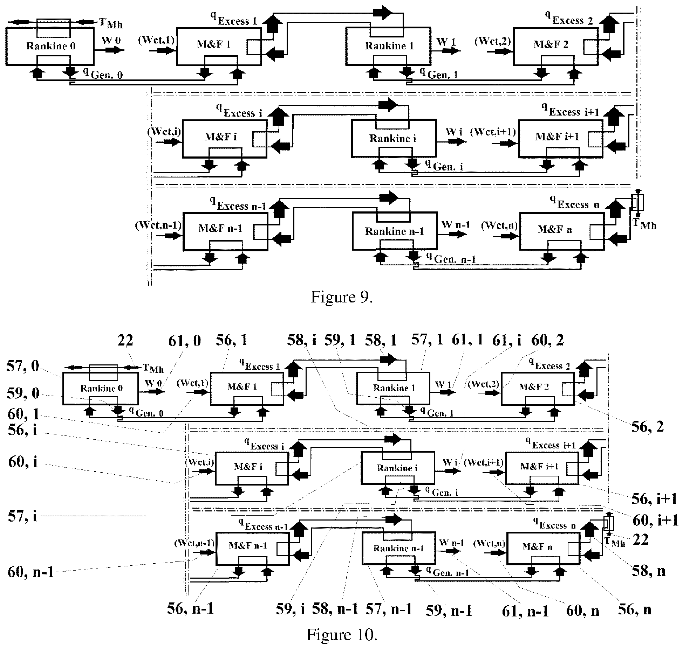

The achievement procedure, according to invention and *fifth* objective is shown in the example of Figure 9. Here, the MEWM&F cycle uses a thermal cascade of M&F and Rankine cycles, schematically represented by rectangles. In this cascade, each *Rankine i* cycle, $i = 1, 2, ..., n-1$, is supplied on one hand to its generation process by the $q_{Excess,i}$ heat source, coming from the gax-absorption excess heat process of the *M&F i* cycle, $i = 1, 2, ..., n - 1$, and on the other hand to its condensing process by the $q_{Gen.i}$ sink source, coming from the generation heat process of the *M&F i + 1* cycle, $i = 1, 2, ..., n - 1$. The last *M&F n* cycle is eliminating its gax-absorption excess process heat $q_{Excess,n}$ to the ambient heat/sink source of temperature $T_{Mh}$ and the first *M&F 1* cycle is providing the *Rankine 0* cycle condensing process with sink source equal to the $q_{Gen.,0}$. Then, the *Rankine 0* generation process is supplied by the ambient heat/sink source of ambient temperature $T_{Mh}$ in order to produce external useful work $W 0$. The *Rankine i* cycles, $i = 0, 1, ... , n - 1$, yield useful work $W i, i = 0, 1, ... , n - 1$, all shown in Figure 9. Taking into account Equations (1)-(7), the total work amount produced by MEWM&F cycle is given by:

$$\sum_{i=0}^{n-1} W, i = q_{Excess,1} \left( \frac{\eta}{1-\eta} + (1-\eta)(1-(1-\eta)^{n-1}) \right) \quad \text{Equation (8)}$$

In Equation (8), $\eta$ and $n$ hold for *Rankine* cycle working efficiency, $\eta = \eta_{ex} \left( 1 - \frac{T_{Mc}}{T_{Mh}} \right)$, and number of *Rankine* cycles used, $n \in N$, respectively. Also, $\eta_{ex}$ is an exergy efficiency, noted prior in Equation (4b) by same symbol. The internal compression work, $|W c i|, i = 1, ..., n$, consumed by *M&F i* cycles compressors of MEWM&F, except those implied in IMVC method application, amounts to:

$$\sum_{i=1}^{n} |Wc, i| = |W c, 1| \frac{1-(1-\eta)^{n+1}}{\eta} \quad \text{Equation (9)}$$

The total amount of compression work consumed when applying IMVC method in order to eliminate the entire excess heat of the gax-absorption processes, $q_{excess\ i}, i = 1, ..., n$, from all *M&F i* cycles, i = 1, ..., n, is calculated with the help of :

$$\sum_{i=1}^{n} |W_{IMVC,i}| = |q_{Excess,1}/m| \frac{1-(1-\eta)^{n+1}}{\eta} (\eta_{ex} COP_{IMVC})^{-1} \quad \text{Equation}$$

$$(10)$$

The total amount of compression work consumed by MEWM&F cycle is obtained from Equations (9) and (10) and is shown in Equation (11):

$$\sum_{i=1}^{n}|W_{ct,i}| = \sum_{i=1}^{n}|W_{c,i} + W_{IMVC,i}| = \left(|W_{c,1}| + q_{Excess,1}(\eta_{ex}COP_{IMVC})^{-1}\right)\frac{1-(1-\eta)^{n+1}}{\eta}$$

Equation (11)

The net amount of compression work of MEWM&F cycle results from Equations (8) and (11):

$$W_{MEWM\&F,net} = \sum_{i=0}^{n-1} W,i - \sum_{i=1}^{n}|W_{c,i} + W_{IMVC,i}| =$$

$$= q_{Excess,1}\left(\frac{\eta}{1-\eta} + (1-\eta)(1-(1-\eta)^{n-1})\right) -$$

$$\left(|W_{c,1}| + q_{Excess,1}(\eta_{ex}COP_{IMVC})^{-1}\right)\frac{1-(1-\eta)^{n+1}}{\eta} > 0$$

Equation (11a)

The *MEWM&F* cycle working efficiency with respect to work consumption is obtained using Equations (11) and (11a):

$$\eta_{MEWM\&F}^{work} = \frac{\sum_{i=0}^{n-1} W,i - \sum_{i=1}^{n}|W_{c,i} + W_{IMVC,i}|}{\sum_{i=1}^{n}|W_{c,i} + W_{IMVC,i}|} =$$

$$\left(\frac{|W_{c,1}|}{q_{Excess,1}} + (\eta_{ex}COP_{IMVC})^{-1}\right)^{-1}\frac{\left(\frac{\eta}{1-\eta} + (1-\eta)(1-(1-\eta)^{n-1})\right)}{\frac{1-(1-\eta)^{n+1}}{\eta}} - 1$$

Equation (12a)

The *MEWM&F* cycle working efficiency with respect to ambient heat consumption results in:

$$\eta_{MEWM\&F}^{heat} = \frac{\sum_{i=0}^{n-1} W,i - \sum_{i=1}^{n}|W_{c,i} + W_{IMVC,i}|}{\frac{q_{Excess,1}}{1-\eta}} =$$

$$q_{Excess,1}\left(\left(\frac{\eta}{1-\eta} + (1-\eta)(1-(1-\eta)^{n-1})\right) - \frac{1-(1-\eta)^{n+1}}{\eta}\left(\frac{|W_{c,1}|}{q_{Excess,1}} + (\eta_{ex}COP_{IMVC})^{-1}\right)\right) > 0$$

Equation (12b)

In conclusion, the achievement procedure, according to invention and *fifth* objective, shown in the example of Figure 9, is characterized by the following simultaneous operation steps: i) activate each *M&F i* cycle, *i* = 1, ..., *n*; ii) connect each *Rankine i* cycle, *i* = 0,1, 2, ..., *n* - 1, to heat and sink sources provided by the *M&F i* and *M&F i* + 1 cycles, respectively; iii) connect *M&F n* and *M&F* 0 cycles to ambient temperature source playing the role of sink and heat source, respectively; iv) produce multi-effect mechanical work by expanding the generated vapor of *Rankine i* cycles, *i* = 0,1, 2, ..., *n* - 1, with the help of theirs turbo-generating processes. The achievement plant, according to invention and *fifth* objective is shown in the example of Figure 10. Here, the MEWM&F plant uses a thermal cascade of M&F and Rankine plants, schematically represented by rectangles. Both M&F and Rankine plants have been shown prior and described in Figure 2 and Figure 6, respectively. In this cascade, each *Rankine* 57, i plant, *i* = 1, 2, ..., *n* - 1, is supplied on one hand to its generator by the $q_{Exeess}$ 58, i heat source, coming from the gax-absorber excess heat of the *M&F* 56, i plant, $i$ = 1, 2, ..., $n$ - 1, and on the other hand to its condenser by the $q_{Gen}$ 59, i sink source, coming from the generator of the *M&F* 56, i+1 plant, $i$ = 1, 2, ..., $n$ - 1. The last *M&F* 56, n plant is eliminating its gax-absorber excess heat $q_{excess}$ 58, n to the ambient heat/sink source 22 of temperature $T_{Mh}$ and the first *M&F* 56, 1 plant is providing the *Rankine* 57, 0 plant condenser with sink source equal to the $q_{Gen}$ 59, 0 heat amount. Then, the *Rankine* 57, 0 plant generator is supplied by the ambient heat/sink source 22 of $T_{Mh}$ ambient temperature. Also, for operation, each *M&F* 56, i plant, $i$ = 1, 2, ..., $n$ needs an internal compression mechanical work supply of $W_{ct}$ 60, i, i = 1, 2, ..., $n$. In this way, each *Rankine* 57, i plant, $i$ = 0,1, ... , $n$ - 1, yields useful work $W$ 61. $i$ = 0,1, ... , $n$ - 1. In conclusion, the achievement plant, according to invention and *fifth* objective, shown in the example of Figure 10, is characterized by the following simultaneous operation steps: i) activate each *M&F* 56, i plants, $i$ = 1, ..., $n$; ii) connect each *Rankine* 57, i plant, $i$ = 0,1, 2, ... , $n$ - 1, to heat and sink sources provided by the *M&F* 56, i and *M&F* 56, i + 1 plants, $i$ = 1, 2, ..., $n$ - 1. respectively; iii) connect *M&F* 56, n and *M&F* 56, 0 plants to ambient temperature source playing the role of sink and heat source, respectively; iv) produce multi-effect mechanical work by expanding the generated vapor of *Rankine* 57, i plants, $i$ = 0,1, 2, ..., $n$ - 1, with the help of theirs turbo-generators.

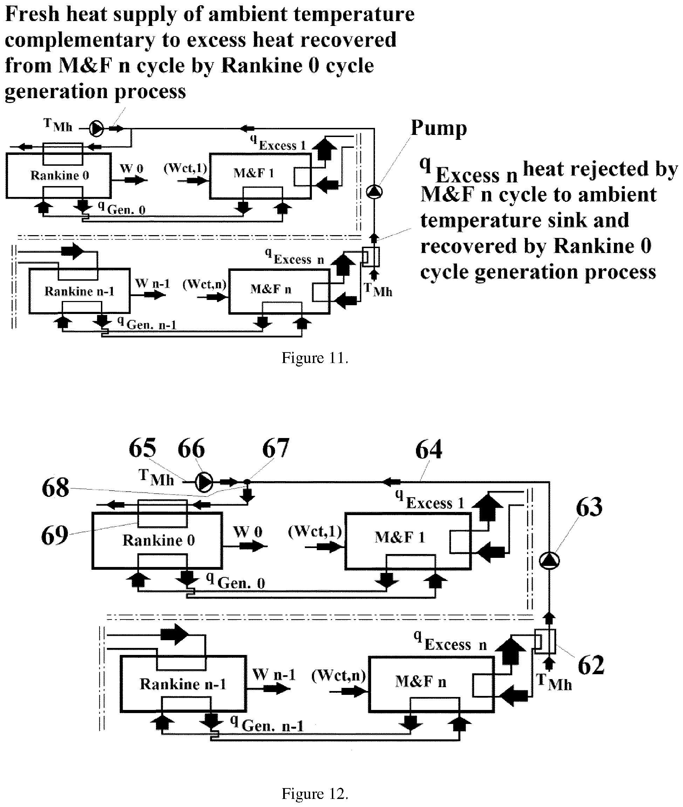

The achievement procedure, according to invention and *sixth* objective is shown in the example of Figure 11. Here, the *HSRMEWM&F* cycle recovers the $q_{Excess,n}$ heat, rejected to the sink source by its last *M&F n* cascade cycle,

$$q_{Excess,n} = (1-\eta)^{n-1} q_{Excess,1} = \frac{(1-\eta)^n}{1-\eta} q_{Excess,1} \qquad \text{Equation (12c)}$$

With it is supplying the generation process of the first cycle *Rankine* 0 of the *HSRMEWM&F* cycle cascade. The fresh complementary part of heat required to fully supply the *Rankine* 0 cycle generation process, for it produces external work W0, is extracted from the ambient temperature heat and amounts with Equation (12c) to:

$$\frac{q_{Excess,1}}{1-\eta} - \frac{(1-\eta)^n}{1-\eta} q_{Excess,1} = \frac{1-(1-\eta)^n}{1-\eta} q_{Excess,1} \qquad \text{Equation (12d)}$$

The *HSRMEWM&F* cycle working efficiency with respect to ambient heat consumption, provided the $q_{Exeess,n}$ heat rejected to ambient by last *M&F n* cycle is recovered by the generation process of the *Rankine* 0 cycle, is calculated with Equations (11a) and (12,d) by Equation (12e), $n \geq 2$, $n \in N$:

$$\eta_{HSRMEWM\&F}^{heat} = \frac{\sum_{i=0}^{n-1} W,i - \sum_{i=1}^{n} |W_{c,i} + W_{IMVC,i}|}{\frac{1-(1-\eta)^n}{1-\eta} q_{Excess,1}} \qquad \text{Equation}$$

$(12\text{e})$

In conclusion, the achievement procedure, according to invention and *sixth* objective, shown in the example of Figure 11, is characterized by the following operation steps: i) start *HSRMEWM&F* cycle full operation; ii) recover the heat rejected by its M&F n cycle to ambient temperature sink source; iii) complete this heat with complementary part in order to supply generation process of the Rankine 0 cycle with full necessary heat in order to produce multi-effect external work $W_{MEWM\&F,net}$, Equation (11a).

The achievement plant, according to invention and *sixth* objective is shown in the example of Figure 12. Here, the *HSRMEWM&F* plant recovers the $q_{Excess,n}$ heat, rejected to the sink source by its last *M&F n* cascade plant, using the heat exchanger 62 with the ambient temperature sink. The heat is transported by an intermediary heat transfer fluid, circulated by pump 63 through an open circuit 64. In addition, a fresh complementary part of heat, required to fully supply the *Rankine* 0 plant generator, is extracted from the ambient temperature heat with the help of a similar intermediary heat transfer fluid, circulated through circuit 65 by pump 66. The circuits 64 and 65 join in point 67. The joining continues with circuit 69 and is constituted as the primary of the Rankine 0 generator heat exchanger 69, in order to provide it with full necessary heating and to ensure external work W0 and further efficient $W_{MEWM\&F,net}$ production. In conclusion, the achievement plant, according to invention and *sixth* objective, shown in the example of Figure 12, is characterized by the following operation steps: i) start *HSRMEWM&F* plant full operation; ii) recover the heat rejected by its M&F n plant to ambient temperature sink source; iii) complete this heat with complementary part in order to supply generator of the Rankine 0 plant with full necessary heat in order to produce W 0 and $W_{MEWM\&F,net}$ external work, given by Equation (11a).

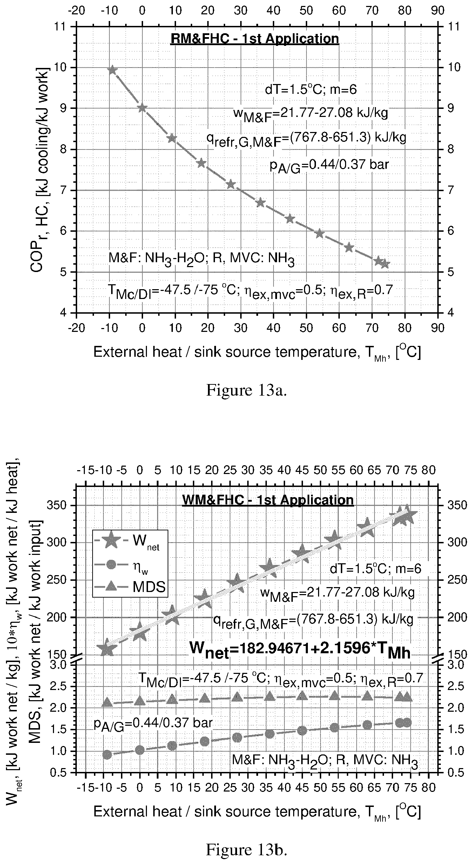

The procedure and achieving plant, according to invention, presented in example of Figures 1, 2, 3 and 4, are capable to achieve, for example, model operation parameters of refrigeration produced by RM&FHC plant. The results are plotted in Figure 13a for $NH_3$ - $H_2O$ and $NH_3$. Here, the hybrid cooling refrigeration effectiveness, expressed with respect to work input, $COP_{c,HC}$, [kJ cooling/kJ work], is represented graphically vs. ambient heat / sink source temperature,

$T_{Mh} \in$ [-9; 74]°C. Other main input data are: i) temperatures of internal sink / desorber 36 inlet $\frac{T_{Mc}}{T_{DI}} = \frac{-47.5}{-75} \ [°C]$ ; ii)

$\frac{p_A}{p_G} = \frac{0.44}{0.37} \ [bar]$ M&F gax-absorber 3 / gax-generator 5 pressures; iii) compressor 16 specific work $w_{M\&F}$ = (21.77 - 27.08) $kJ/kg$; iv) generator 4 specific refrigeration capacity at $\sim T_{Mc}$ temperature $q_{refr,G,M\&F}$ = (767.8 - 651.3) $kJ/kg$; v) exergy efficiency $\eta_{ex}$ = 0.5 - 0.7; vi) IMVC number of mvc units m = 6. The plot reveals that COP is by cca. one order of magnitude higher as compared to classic mvc technology COP for refrigeration and condensing temperatures considered, $T_{DI}$ and $T_{Mh}$, respectively, given above.

The procedure and achieving plant, according to invention, presented in example of Figures 1, 2, 3, 4, 5 and 6 are capable to achieve, for example, model operation parameters of work produced by WM&FHC plant. The results are plotted in Figure 13b for $NH_3$ - $H_2O$ and $NH_3$. Here, the specific work net output efficiency, expressed with respect to refrigerant unit, $W_{net}$, [kJ work/kg], is represented vs. external ambient heat / sink source temperature, $T_{Mh} \in$ [-9; 74]°C. All input data used for Figure 13a plot hold true in case of Figure 13b plot as well. The plot reveals $W_{net}(T_{Mh})$ is quasi-linear. Its equation of is given in bold. Figure 13b plots a second function, $\eta_w(T_{Mh})$, the work efficiency with respect to ambient heat input, [kJ work net / kJ heat]. A third function, the Multiplication of Driving Supply, $MDS(T_{Mh})$, shows the work net efficiency with respect to work input, [kJ work net / kJ work input].

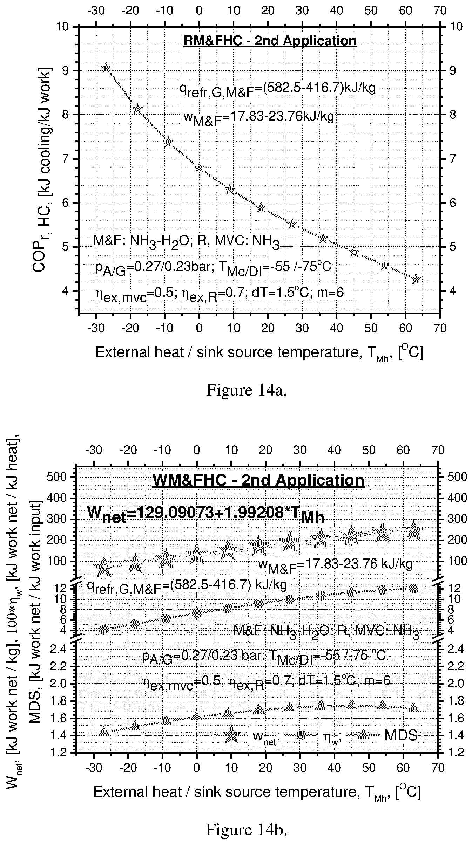

The procedure and achieving plant, according to invention, presented in example of Figures 1, 2, 3 and 4, are capable to achieve, for example, model operation parameters of refrigeration produced by RM&FHC plant. The results are plotted in Figure 14a for $NH_3$ - $H_2O$ and $NH_3$. The results of Figure 14a and conclusion are similar to those of Figure 13a, but are plotting $COP_{c,HC}(T_{Mh})$ when temperature inputs are $T_{Mh} \in$ [-27; 63]°C, and $\frac{T_{Mc}}{T_{DI}} = \frac{-55}{-75} \ [°C]$ .

The procedure and achieving plant, according to invention, presented in example of Figures 1, 2, 3, 4, 5 and 6 are capable to achieve, for example, model operation parameters of work produced by WM&FHC plant. The results are plotted in Figure 14b for $NH_3$ - $H_2O$ and $NH_3$. All input data used for Figure 14a plot hold true in case of Figure 14b plot as well. The results of Figure 14b and conclusion are similar to those of Figure 13b, but are plotting functions $COP_{c,HC}(T_{Mh})$, $\eta_w(T_{Mh})$ and $MDS(T_{Mh})$, when the temperature inputs are $T_{Mh} \in$ [-27; 63]°C and $\frac{T_{Mc}}{T_{DI}} = \frac{-55}{-75} \ [°C]$ . The decrease of $T_{Mc}$ from -47.5°C to -55°C is changing the linear equation given in bold.

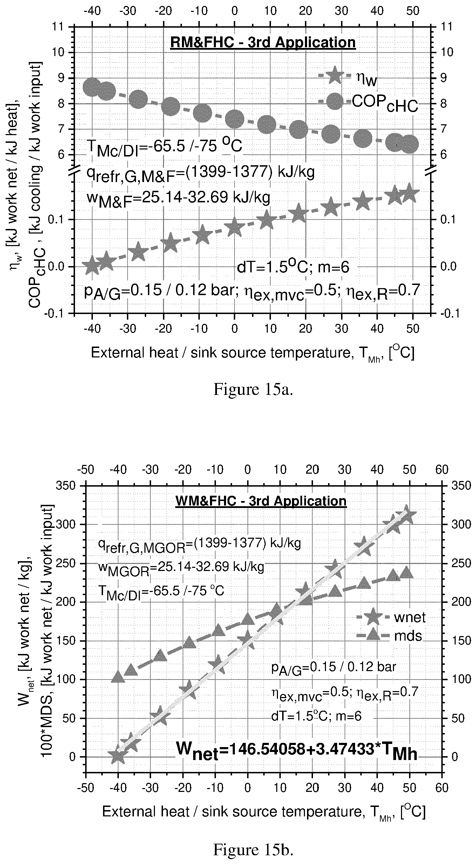

The procedure and achieving plant, according to invention, presented in example of Figures 1, 2, 3 and 4, are capable to achieve, for example, model operation parameters of refrigeration produced by RM&FHC plant. The results are plotted in Figure 15a for $NH_3$ - $H_2O$ and $NH_3$. The results of Figure 15a and conclusion are similar to those of Figures 13a and 14a. This time, the plot is for $COP_{c,HC}(T_{Mh})$ and $\eta_w(T_{Mh})$ functions, when temperature inputs are $T_{Mh} \in$ [-40;49]°C and $\frac{T_{Mc}}{T_{DI}} = \frac{-65.5}{-75} \ [°C]$ .

The procedure and achieving plant, according to invention, presented in example of Figures 1, 2, 3, 4, 5 and 6 are capable to achieve, for example, model operation parameters of work produced by WM&FHC plant. The results are plotted in Figure 15b for $NH_3$ - $H_2O$ and $NH_3$. All input data used for Figure 15a plot hold true in case of Figure 15b plot as well. The results of Figure 15b and conclusion are similar to those of Figure 13b, but plot $COP_{c,HC}(T_{Mh})$, $\eta_w(T_{Mh})$ functions only, when the temperature inputs are $T_{Mh} \in$ [-40;49]°C and $\frac{T_{Mc}}{T_{DI}} = \frac{-65.5}{-75} \ [°C]$ . The decrease of $T_{Mc}$ from -55°C to -65.5°C is changing the linear equation given in bold and the tilt is highest.

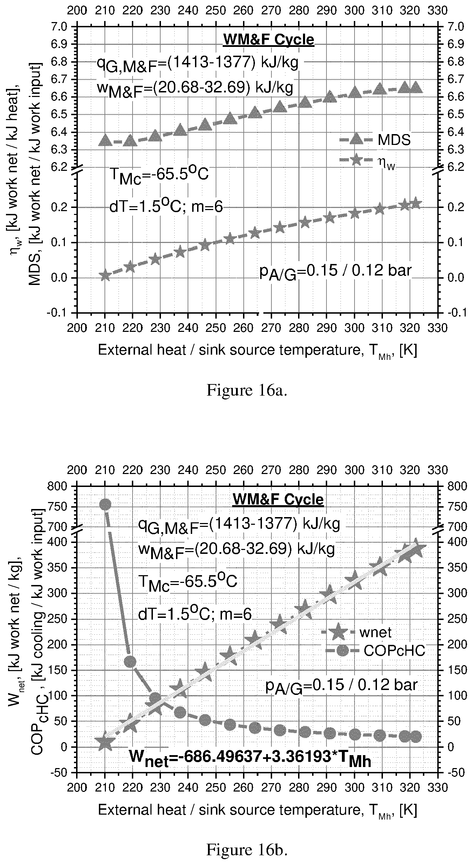

The procedure and achieving plant, according to invention, presented in example of Figures 1, 2, 7 and 8, are capable to achieve, for example, model operation parameters of work produced by WM&F plant. The results are plotted in Figure 16a for $NH_3$ - $H_2O$ and $NH_3$. Here, the $MDS(T_{Mh})$ and $\eta_w(T_{Mh})$ functions are represented vs. ambient heat / sink source temperature, $T_{Mh} \in$ [210; 322] K. Other main input data are: i) generator 4 heat load of $q_{G,M\&F}$ = 1413-1377

$$\frac{p_A}{p_G} = \frac{0.15}{0.12}\ [bar]$$

[kJ/kg]; ii) compressor 16 specific work $w_{M\&F}$ = (21.77 - 32.69) *kJ/kg*; iii) $\frac{p_A}{p_G} = \frac{0.15}{0.12}\ [bar]$ M&F gax-absorber 3 / gax-generator 5 pressures; iv) internal sink temperature is $T_{Mc}$ = -65.5°C; v) exergy efficiency $\eta_{ex}$ = 0.5 - 0.7; vi) IMVC number of mvc units m = 6. The results of $MDS(T_{Mh})$ and $\eta_w(T_{Mh})$ functions show higher values as compared to those of M&FHC plants for same operating parameters.

The procedure and achieving plant, according to invention, presented in example of Figures 1, 2, 7 and 8 are capable to achieve, for example, model operation parameters of work and refrigeration produced by WM&F plant. The results are plotted in Figure 16b for $NH_3$ - $H_2O$ and $NH_3$. Here, the specific work net output efficiency, expressed with respect to refrigerant unit, $W_{net}$, [kJ work/kg], is represented vs. external ambient heat / sink source temperature, $T_{Mh} \in$ [210; 322] *K*. All input data used for Figure 16a plot hold true in case of Figure 16b plot as well. The plot reveals $W_{net}(T_{Mh})$ is quasi-linear, similar to the other figures plots. Figure 16b plots the second function, $COP_{c,HC}(T_{Mh})$, [kJ cooling/kJ work]. Although the refrigeration temperature of WM&F plant is higher as compared to that of RM&FHC plant, i.e. $T_{Mc}$ = -65.5°C > $T_{DI}$ = -75°C, which in some applications matters, the very high comparative values of $COP_{c,HC}(T_{Mh})$ compensate for this drawback.

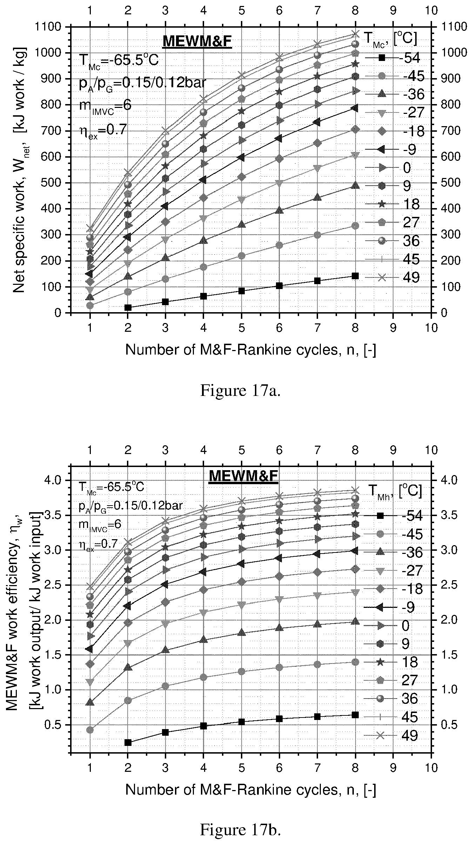

The procedure and achieving plant, according to invention, presented in example of Figures 1, 2, 7, 8, 9 and 10 are capable to achieve, for example, model operation parameters of work produced by MEWM&F plant, according to Equation (11a). The results are plotted in Figure 17a for $NH_3$ - $H_2O$ and $NH_3$. Here, the family of specific work net output, $W_{net}$, [kJ work/kg], having as parameter the ambient heat / sink source temperature, $T_{Mh} \in$ [-54; 49]°C and $T_{Mh} \in$ [0; 49]°C, for air and water, respectively, is represented vs. cascade M&F-Rankine cycles number, "n". Other main input

$$\frac{p_A}{p_G} = \frac{0.15}{0.12}\ [bar]$$

data are: i) internal $T_{Mc}$ = -65.5°C sink temperature; ii) $\frac{p_A}{p_G} = \frac{0.15}{0.12}\ [bar]$ M&F gax-absorber 3 / gax-generator 5 pressures; iii) IMVC number of mvc units *m* = 6. The curves $W_{net}(n)$ show quasi-linear behavior up to cca. $T_{Mh}$ = -27°C, while for higher temperatures the increase in work output with complexity increase is done with diminished returns.

The procedure and achieving plant, according to invention, presented in example of Figures 1, 2, 7, 8, 9 and 10 are capable to achieve, for example, model operation parameters of work produced by MEWM&F plant. The results are plotted in Figure 17b for $NH_3$ - $H_2O$ and $NH_3$. Here, the MEWM&F plant efficiency with respect to work input, $\eta_w$, [kJ work output / kJ work input] is plotted vs. ambient heat / sink temperature, $T_{Mh} \in$ [-54; 49]°C, in case of air source, and $T_{Mh} \in$ [0; 49]°C, in case of water source, for same input data as those used in Figure 17a plot, according to Equation (12a). The efficiency is $T_{Mh}$ and "n" function, $\eta_w = \eta_w(T_{Mh}, n)$ and nonlinear. Its values are high, showing it is increasing with $T_{Mh}$ increase, but the returns are diminished with $T_{Mh}$ increase.

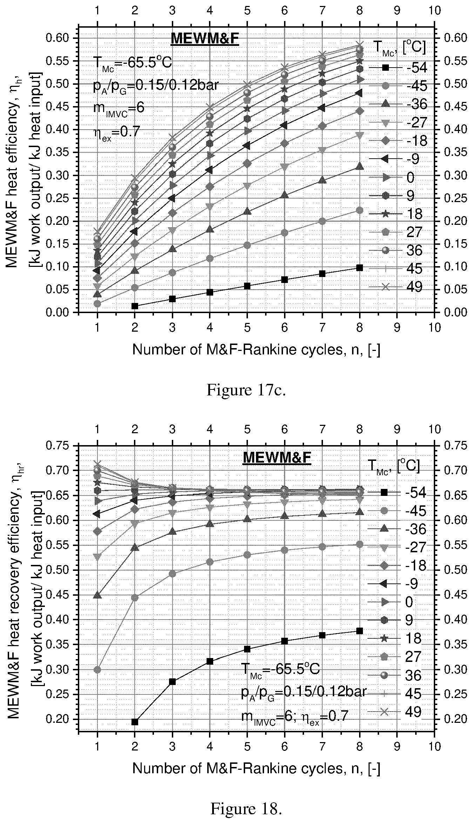

The procedure and achieving plant, according to invention, presented in example of Figures 1, 2, 7, 8, 9 and 10, are capable to achieve, for example, model operation parameters of MEWM&F plant work efficiency with respect to cascade M&F-Rankine cycles number, "n", $\eta_h = \eta_h(n)$, [kJ work output / kJ heat input]. The results are plotted in Figure 17c for $NH_3$ - $H_2O$ and $NH_3$, using same input data as those used in Figure 17a plot. The curves family has as parameter the ambient heat / sink source temperature, $T_{Mh} \in$ [-54; 49]°C and $T_{Mh} \in$ [0; 49]°C, according to Equation (12b). Similar to the $W_{net}$ curves of Figure 17a, $\eta_h(n)$ function shows quasi-linear behavior up to cca. $T_{Mh}$ = -36°C, while for higher temperatures the increase in work output with complexity increase is done with diminished returns.

The procedure and achieving plant, according to invention, presented in example of Figures 1, 2, 7, 8, 9, 10, 11 and 12 are capable to achieve, for example, model operation parameters of HSRMEWM&F plant work efficiency with respect to cascade M&F-Rankine cycles number, "n", $\eta_{heat\ recovered}(n)$, [kJ work output / kJ recovered heat input]. The results are plotted in Figure 18 for $NH_3$ - $H_2O$ and $NH_3$, using same input data as those used in Figure 17a plot, and the curves family has as parameter the ambient heat / sink source temperature, $T_{Mh} \in$ [-54; 49]°C and $T_{Mh} \in$ [0; 49]°C, according to Equation (12e). The family curves increase continuously with "n" variable up to $T_{Mh}$ = 9°C parameter increase. For higher values, $T_{Mh}$ > 9°C, the efficiency slightly decreases for n = 1 - 3, but remain quasi-constant for n = 4 - 8. Comparing the two efficiencies, $\eta_h$ and $\eta_{hr}$, plotted in Figures 17c and 18, respectively, it becomes obvious, the plant operation with heat recovery is always preferable.

REFERENCES

1. Altenkirch, E., & Tenckhoff, B. (1911). Absorptionkältemaschine zur kontinuierlichen Erzeugung von Kälte und Wärme, oder auch von Arbeit. German Patent No. 278076.
2. Staicovici M. D., 2014, Coabsorbent and Thermal Recovery Compression Heat Pumping Technologies. Springer Verlag.

**Claims**

1. Procedure destined to ensure the *M&F* cycle a correct and efficient operation, including a first closed loop of refrigerant-absorbent mixture, having isobar processes of high-pressure absorption and gax-absorption, serially connected on mixture and vapor side, on one hand, and isobar low-pressure generation and gax-generation, serially connected on mixture and vapor side, on the other hand, provided with means of mixture pumping and expansion, a second closed loop of intermediary heat transfer fluid, provided with pumping means, a refrigerant mechanical vapor compression means, supplied externally with work input and provided with suction, discharge and distribution means, a source which is usefully refrigerated and an external sink / heat source of ambient temperature and an Integral Mechanical Vapor Compression method application, supplied externally with work input and provided with an adequate number of known mechanical vapor compression cooling cycles operated by appropriate working fluid, each having means of refrigerant mechanical vapor compression, condensation, expansion and evaporation and a third and a fourth closed loop of intermediary heat transfer fluid and pumping means, **characterized in such that,** the first closed loop high-pressure processes are separated by the low-pressure processes by expansion means, while pressure rise is ensured by pumping means, the vapor generated during the generation process is produced by the external heating of the source to be usefully refrigerated, the vapor generated by the gax-generation process is done by recovering the gax-absorption generation heat from gax-absorption process, equal to the gax-generation heat, the absorption process heat is eliminated to the external sink/heat source of ambient temperature, the gax-absorption generation heat is eliminated and transferred by the gax-absorption process to the gax-generation process by means of the second closed loop of intermediary heat transfer fluid provided with pumping forced circulation, the vapor generated by the generator and gax-generator processes suffer successively the refrigerant mechanical vapor compression process by suction, mechanical vapor compression and discharge to absorption and gax-absorption processes, in order that the gax-absorption excess heat be eliminated at the same time with its generation applying the Integral Mechanical Vapor Compression method by dividing it in complementary parts along the whole gax-absorption process between the adequate number of the mechanical vapor compression cooling cycles, which extract these heat parts with the help of the third closed loop of intermediary heat transfer fluid provided with pumping means by running with progressive higher evaporation temperatures between the internal sink and the external sink temperatures and then eliminate them by theirs condensing processes, connected to the external sink source by means of the fourth intermediary heat transfer fluid closed loop with forced circulation and **characterized by** same external sink source condensing temperature.

2. Applying plant of the procedure, according to the claim 1, destined to ensure the *M&F* plant a correct and efficient operation, including a first closed loop of isobar devices of high-pressure absorber and gax-absorber, serially connected on mixture and vapor side, on one hand, and isobar low-pressure generator and gax-generator, serially connected on mixture and vapor side, on the other hand, provided with a mixture pump and expansion valve, a second closed loop of intermediary heat transfer fluid, provided with a pump, a refrigerant compressor, supplied externally with work input and provided with suction and discharge lines and three-way valves of distribution, an external source which is usefully refrigerated and an external sink / heat source of ambient temperature and an adequate number of mechanical vapor compression cooling plants, supplied externally with work input and operated by appropriate working fluid, each having compressor, condenser, expansion valve and evaporator and a third and a fourth closed loops of intermediary heat transfer fluid and pumps, **characterized in such that,** the closed loop 1 of isobar devices of high-pressure absorber 2 and gax-absorber 3, on one hand, and isobar low-pressure generator 4 and gax-generator 5, on the other hand, are separated by the expansion valve 7 and the pressure rise is ensured by the pump 6 of mixture circulation, the vapor generated by the generator 4 is produced by the external heating of the source to be usefully refrigerated 8, 9, the vapor yield of the gax-generator 5 is generated by recovering the heat released by the gax-absorber 3, equal to that of the gax-generator 5, this heat is eliminated and transferred from the gax-absorber 3 to the gax-generator 5 by means of the intermediary heat transfer fluid of second closed loop 11, circulated by pump 10, the high-pressure absorber 2 heat is eliminated to the external sink/heat source of ambient temperature 22, the vapor generated by the generator 4 and gax-generator 5 suffer successively a mechanical vapor compression with the help of the suction line made up of pipe 12, pipe 13, both connected with the regulating 3-way valve 14 and pipe 15, the mechanical vapor compressor 16 and the discharge line supplying the absorber 2 and gax-absorber 3, with the help of the pipe 17, 3-way regulating 18, pipe 19 and pipe 20, in order that the excess heat of the gax-absorber 3 be eliminated during its generation by dividing the gax-absorber 3 temperature operation domain $\delta T_{gax} = [T_{Mh} + \delta T, T_{Mc} + \delta T]$, where $T_{Mh}$, $T_{Mc}$ and $\delta T$ hold for the external heat/sink source temperature, internal sink source temperature and a temperature pinch, respectively, in "$m$", $m \in N$, temperature

subintervals, the excess heat generated is eliminated using the mechanical vapor compression cooling plant 21i in each "$i$" temperature subinterval, $i$ = 1, 2, ..., $m$, each cooling plant 21,i having similar components serially connected, compressor 21,i,Cp, condenser 21,i,C, expansion valve 21,i,EV and evaporator 21,i,E, $i$ = 1, 2, ..., $m$, the evaporator 21,i,E is extracting the excess heat from the "$i$ - $th$" temperature subinterval by means of the intermediary heat transfer fluid circulated by pump 21,i,p in the third closed loop 21,i,E,htl, $i$ = 1, 2, ..., $m$, the evaporators 21,i,E, $i$ = 1, 2, ..., m, operate at increasing evaporation temperature, $T_{Mc} + i * dT_{Mhc} < T_{Mc} + (i + 1) * dT_{Mhc}$, $dT_{Mhc} = (T_{Mh} - T_{Mc}) * m^{-1}$, $i$ = 0,1, 2, ..., $m$ - 1, but theirs condensers 21,i,C, $i$ = 1, 2, ..., $m$, have the same condensing temperature, sensibly equal to the external sink/heat ambient temperature, i.e. $T_{Mh} + \delta T$, and the condensers 21,i,C reject the condensing heat to the external sink source of ambient temperature 22 with the help of the intermediary heat transfer fluid, circulated by means of the pump 23i in the fourth closed loop 24i and a heat exchanger 25i, connected to the sink source 22, $i$ = 1, 2, ..., $m$.

3. Procedure, according to the claim 1, including, on one hand, the *M&F* cycle and, on the other hand, a single-stage absorption refrigeration cycle, which has a closed loop of refrigerant-absorbent mixture with connected processes of pumping, poor-rich mixture heat exchange, high-pressure vapor generation, mixture expansion and low-pressure absorption, to close the loop, and high-pressure condensation of generated refrigerant vapor, connected on vapor side with the high-pressure generation, refrigerant sub-cooling, expansion and desorption of expanded refrigerant and an external source to be usefully refrigerated, synergic coupled with a mechanical vapor compression heat pump cycle, supplied externally by work input, including processes of compression, condensation, expansion and evaporation and three closed loops of intermediary heat transfer fluid, provided with pumping means, forming pairs of thermal connections, first, of evaporation process of mechanical vapor compression heat pump cycle and condensing process of single-stage absorption refrigeration cycle, second, of condensing process of mechanical vapor compression heat pump cycle and generation process of single-stage absorption refrigeration cycle, and third, of low-pressure generation process of *M&F* cycle and low-pressure absorption process of single-stage absorption refrigeration cycle, **characterized in such that,** the evaporation process of mechanical vapor compression heat pump cycle extracts with the help of first closed loop the heat released by the condensing process of single-stage absorption refrigeration cycle, the condensing heat of mechanical vapor compression heat pump cycle supplies with heat the generation process of single-stage absorption refrigeration cycle with the help of the second closed loop and the absorption process of single-stage absorption refrigeration cycle releases heat using the third closed loop and the sink coming from the M&F low-pressure generation process in order that the desorption process of single-stage absorption refrigeration cycle be capable to provide refrigeration to the external source, as useful effect.

4. Applying plant of the procedure, according to the claims 1, 2 and 3, including on one hand the *M&F* plant and, on the other hand, a single-stage absorption refrigeration plant, which has a closed loop of refrigerant-absorbent mixture with serially connected pump, poor-rich mixture heat exchanger, high-pressure vapor generator, mixture expansion valve and low-pressure absorber, to close the loop, and high-pressure condenser of generated refrigerant vapor, connected on vapor side with the high-pressure generator, refrigerant sub-cooler, expansion valve and desorber of expanded refrigerant and an external source to be usefully refrigerated, synergic coupled with a mechanical vapor compression heat pump plant, supplied externally by work input, including serially connected compressor, condenser, expansion valve and evaporator and three closed loops of intermediary heat transfer fluid, provided with pumps, forming pairs of thermal connections, first, of evaporator of mechanical vapor compression heat pump plant and condenser of single-stage absorption refrigeration plant, second, of condenser of mechanical vapor compression heat pump plant and generator of single-stage absorption refrigeration plant, and third, of low-pressure generator of *M&F* plant and low-pressure absorber of single-stage absorption refrigeration plant, **characterized in such that,** the M&F plant is synergic coupled in a thermal cascade with the single-stage absorption refrigeration plant, the refrigerant-absorbent mixture closed loop 26 of the single-stage absorption refrigeration plant is covering serially connected devices, of rich mixture pump 27, secondary poor-rich mixture heat exchanger 28, high-pressure vapor generator 29, primary poor-rich mixture heat exchanger 28, poor mixture expansion valve 30 and low-pressure absorber 31, to close the loop, the generated refrigerant vapor 32 cover subsequently a series of devices, high-pressure condenser 33, liquid refrigerant sub-cooler 34 and expansion valve 35, when it becomes low-pressure sub-cooled liquid refrigerant and is desorbed in the low-pressure desorber 36, and the desorbed refrigerant vapor 37 is superheated in a recovering way in the refrigerant sub-cooler 34 and is absorbed in the low-pressure absorber 31, to close the single-stage absorption refrigeration plant, the supply of the high-pressure vapor generator 29 with heat source is provided by the mechanical vapor compression heat pump plant 38, which includes serially connected devices, compressor 39, high-pressure condenser 40, expansion valve 41 and low-pressure evaporator 42, the evaporator 42 extracts heat released by the single-stage absorption refrigeration plant high-pressure condenser 33 with the help of the intermediary heat transfer fluid circulated by pump 43 in the closed loop 44 and the condenser 40 is supplying generator 29 with the help of the intermediary heat transfer fluid, circulated by pump 45 in the closed loop 46, the single-stage absorption refrigeration plant low-pressure absorber 31 releases heat with the help of the sink coming from M&F generator 4 using the intermediary heat transfer fluid circulated by pump 47 in the closed loop having generator 4 pipe 8 tour and pipe 9 retour, in order that the single-stage absorption refrigeration plant low-pressure desorber 36 provides externally the useful refrigeration effect making use of the intermediary heat transfer fluid circulated by pump 48 in the closed loop having pipe 49 as tour and pipe 50 as retour.

5. Procedure, according to the claims 1 and 3, including the *M&F* cycle synergic coupled with the single-stage absorption refrigeration cycle and which in its turn, is synergic coupled, on one hand with the mechanical vapor compression heat pump cycle and, on the other hand, with a Rankine cycle, operated by an adequate working fluid, covering a closed loop with serially connected processes, pumping, high-pressure vapor generation, turbo-expansion and work generation and low-pressure condensing of working fluid and achieved with the help of two closed loops of intermediary heat transfer fluid, provided with pumping means and forming pairs of thermal connections, first of Rankine cycle condensing process and the desorption process of the single-stage absorption refrigeration cycle and second of high-pressure vapor generation of Rankine cycle and the external sink / heat source of ambient temperature, to close the loop, **characterized in such that,** in the last thermal cascade, on one hand, the low-pressure condensing of the Rankine cycle is done with the sink produced by the desorption process of the single-stage absorption refrigeration cycle with the help of the first closed loop, and on the other hand, the high-pressure generation of the Rankine cycle is done by heat supply of ambient temperature heat "source with the help of the second closed loop, in order that the generated vapor of Rankine cycle is suffering the turbo-expansion process and external work generation, higher than the work input of the cycle.

6. Applying plant of the procedure, according to claims 1, 2, 3, 4 and 5, including the *M&F* plant which is synergic coupled with the single-stage absorption refrigeration plant and which in its turn is synergic coupled, on one hand with the mechanical vapor compression heat pump plant and, on the other hand, with a Rankine plant, operated by an adequate working fluid, covering a closed loop with serially connected devices, pump, high-pressure vapor generator, turbo-generator and low-pressure condenser, achieved with the help of two closed loops of intermediary heat transfer fluid, provided with pumps and forming pairs of thermal connections, first of high-pressure vapor generator of Rankine plant and external sink / heat source of ambient temperature and second of Rankine plant condenser and desorber of single-stage absorption refrigeration plant, **characterized in such that,** the Rankine plant working fluid is pumped by pump 51, subsequently covers the high-pressure vapor generator 52 with the help of external ambient temperature heat 22 supply, ensured by first closed loop, than covers turbo-generator 53, in order to produce external work, higher than the work input of the cycle, and finally covers the low-pressure condenser 54, having the sink ensured by the single-stage absorption refrigeration plant desorber 36, which extracts the Rankine condensing heat with the help of the second closed loop provided with pump 48 and covering on one hand pipe 50, which is desorber 36 tour pipe and condenser 54 return pipe and on the other hand pipe 49 which is desorber 36 return pipe and condenser 54 tour pipe, to close the plant cycle.

7. Procedure, according to the claim 1, including the M&F cycle, which is synergic coupled with a Rankine cycle, operated by an adequate working fluid, covering a closed loop with serially connected processes, pumping, high-pressure vapor generation, turbo-generation and low-pressure condensing of working fluid and achieved with the help of two closed loops of intermediary heat transfer fluid, provided with pumping means and forming pairs of thermal connections, first of Rankine cycle condensing process and the low-pressure generation process of the M&F cycle and second of high-pressure vapor generation of Rankine cycle and the external sink / heat source of ambient temperature, **characterized in such that,** in the M&F and Rankine cycles thermal cascade, on one hand, the internal sink source of Rankine cycle is the M&F cycle generation process which is extracting the condensing heat of said Rankine cycle low-pressure condensing process with the help of the first closed loop, and, on the other hand, the high pressure generation process of the Rankine cycle is supplied externally by the heat/sink source of ambient temperature with the help of the second closed loop, in order that the generated vapor is suffering the turbo-expansion process, when it is producing useful work externally, higher than the work input of the M&F cycle.

8. Applying plant of the procedure, according to claims 1 and 7, including the *M&F* plant which is synergic coupled with the Rankine plant, operated by an adequate working fluid covering a closed loop with serially connected devices, pump, high-pressure vapor generator, turbo-generator and low-pressure condenser of working fluid and achieved with the help of two closed loops of intermediary heat transfer fluid, provided with pumps and forming pairs of thermal connections, first of Rankine plant low-pressure condenser and low-pressure generator of M&F plant and second of high-pressure vapor generator of Rankine plant and external sink / heat source of ambient temperature, **characterized in such that,** in the M&F-Rankine plants thermal cascade the working fluid of Rankine plant is covering the closed loop with serially connected devices, pump 51, high-pressure vapor generator 52, turbo-generator 53 and low-pressure condenser 54, to close the loop, the working fluid condensing is done in the low-pressure condenser 54 with M&F low-pressure generator 4, which extracts the Rankine condensing heat circulating the intermediary heat transfer fluid with pump 55 in the first closed loop made up of tour pipe 8 and retour 9 of condenser 54 and tour 9 and retour 8 of generator 4, and on the other hand with the help of second closed loop, where the high-pressure generator 52 is supplied by external ambient temperature heat 22. in order that the generated vapor enters turbo-generator 53 to produce external work, higher than the work input of the M&F plant.

9.  Procedure, according to the claims 1 and 7, including on one hand *n M&F* cycles synergic coupled with *n Rankine* cycles, *n ∈ N,* and on the other hand *2n* closed loops covered by an intermediary heat transfer fluid with pumping means, enabling after case heat supply or heat extraction between mentioned cycles and an external ambient temperature sink / heat source, **characterized in such that,** the *2n M&F* and *Rankine* cycles form together a thermal cascade constructed in such a way that each *Rankine i* cycle, *i* = 1, 2, ..., *n* - 1, is supplying on one hand its high-pressure generation process with the $q_{excess,i}$ heat source, recovered from the high-pressure gax-absorption excess heat process of the *M&F i* cycle, *i* = 1, 2, ..., *n* - 1, using the closed loop for heat supply, and its low-pressure condensing process is provided with the $q_{Gen.,i}$ sink heat, coming from the low-pressure generation process of the *M&F i* + 1 cycle, *i* = 1, 2, ..., *n* - 1, using the heat extraction closed loop, and on the other hand the last *M&F n* cycle is eliminating its gax-absorption process excess heat $q_{Exeess,n}$ to the ambient sink / heat source, and the first *M&F* 1 cycle is providing the *Rankine* 0 cycle low-pressure condensing process with the sink source equal to $q_{Gen.,0}$, using in both cases the heat extraction closed loop, in order that the *Rankine* 0 high-pressure generation process be supplied by the ambient temperature heat / sink source and the whole cycle yields externally useful work *W i,* coming from the *Rankine i* cycles, *i* = 0, 1, ... , *n* - 1, with a multiplied efficiency and amount, much higher than the internal work consumption of the whole thermal cascade plant.

10. Applying plant of the procedure, according to the claims 1, 2, 7 and 8, including on one hand *n M&F* plants synergic coupled with *n Rankine* plants, *n ∈ N*, and on the other hand *2n* closed loops covered by an intermediary heat transfer fluid with help of pumps, enabling after case heat supply or heat extraction between mentioned plants and an external ambient temperature sink / heat source, **characterized in such that,** the *2n M&F* and *Rankine* plants form together a thermal cascade constructed in such a way that each *Rankine* 57, i plant, *i* = 1, 2, ..., *n* - 1, is supplied on one hand to its generator by the $q_{Excess}$ 58, i heat source, coming from the gax-absorber excess heat of the *M&F* 56, i plant, *i* = 1, 2, ..., *n* - 1, using the closed loop for heat supply, depicted on top of plants and to its condenser by the $q_{Gen}$ 59, i sink source, coming from the generator of the *M&F* 56, i+1 plant, *i* = 1, 2, ..., *n* - 1, using the closed loop for heat extraction, depicted on bottom of plants and on the other hand the last *M&F* 56, n plant is eliminating its gax-absorber excess heat $q_{Excess}$ 58, n to the ambient temperature heat/sink source 22 and the first *M&F* 56, 1 plant is providing the *Rankine* 57, 0 plant condenser with sink source equal to the $q_{Gen}$ 59, 0 heat amount, in order that the *Rankine* 57, 0 plant generator be supplied by the ambient temperature heat/sink source 22, and the *M&F* 56, i plants, *i* = 1, 2, ..., *n* be supplied by internal mechanical compression work of $W_{ct}$ 60, i, i = 1, 2, ..., *n*, for each *Rankine* 57, i plant, *i* = 0,1, ... , *n* - 1, to yield externally useful work W 61, i. *i* = 0, 1, ... , *n* - 1, with a multiplied efficiency and amount, much higher than the internal work consumption of the whole thermal cascade plant.

11. Procedure, according to the claims 1, 7 and 9, including the thermal cascade of *2n M&F* and *Rankine* cycles, provided with recovering means of the excess heat rejected by last *M&F* cycle of said cascade to external sink and means of supplying with heat the generation process of the first *Rankine* cycle of said cascade, **characterized in such that,** the thermal cascade of *2n M&F* and *Rankine* cycles recovers the $q_{Excess,n}$ heat rejected by its last *M&F n* cascade cycle to the ambient sink / heat source and transfers it to the generation process of the first cycle *Rankine* 0 cycle of the cascade together with a fresh complementary part of ambient temperature heat required to fully supply the *Rankine* 0 cycle high-pressure generation process in order to produce the external work W0 and increase cascade thermal efficiency.

12. Applying plant of the procedure, according to the claims 1, 2, 7, 8, 9 and 10, including the thermal cascade of *2n M&F* and *Rankine* plants, provided with recovering circuits of the excess heat rejected by last *M&F* plant of said cascade to external sink and circuits of supplying with heat the generator of the first *Rankine* plant of said cascade, **characterized in such that,** the plant recovers the $q_{Excess,n}$ heat rejected to the sink source by its last *M&F n* cascade plant using the heat exchanger 62 with the ambient temperature sink, the heat is transported by an intermediary heat transfer fluid, circulated by pump 63 through an open circuit 64, a fresh complementary part of heat required to fully supply the *Rankine* 0 plant generator is extracted from the ambient temperature heat with the help of a similar intermediary heat transfer fluid circulated through circuit 65 by pump 66, the circuits 64 and 65 join in connection point 67 and the joining continues with circuit 69 constituted as the primary of the Rankine 0 generator heat exchanger 69, in order to provide it with full necessary heating and to ensure external work W0 and further efficient work production of thermal cascade.

Figure 1.

Figure 2.

Figure 3.

Figure 4.

Figure 5.

Figure 6.

Figure 7.

Figure 8.

Figure 9.

Figure 10.

**Fresh heat supply of ambient temperature complementary to excess heat recovered from M&F n cycle by Rankine 0 cycle generation process**

Pump

$q_{Excess\ n}$ heat rejected by M&F n cycle to ambient temperature sink and recovered by Rankine 0 cycle generation process

Figure 11.

Figure 12.

Figure 13a.

Figure 13b.

Figure 14a.

Figure 14b.

Figure 15a.

Figure 15b.

Figure 16a.

Figure 16b.

Figure 17a.

Figure 17b.

Figure 17c.

Figure 18.

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 23 02 0142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 051 230 A1 (STAICOVICI MIHAIL-DAN [RO]) 3 August 2016 (2016-08-03) * pages 1-8; figures 2, 3 * | 1-7,9-12 | INV. F25B15/02 F25B25/02 |
| X | WO 2008/094057 A2 (STAICOVICI MIHAIL DAN [RO]) 7 August 2008 (2008-08-07) * pages 1-30; figures 10, 14 * | 1-7,9-12 | |
| A | STAICOVICI M D: "Coabsorbent cycles", IIR - GUSTAV LORENTZEN CONFERENCE ON NATURAL WORKING FLUIDS.PROCEEDINGS, XX, XX, 28 May 2006 (2006-05-28), pages 1-9, XP008094481, * the whole document * | 1-7,9-12 | |

**TECHNICAL FIELDS SEARCHED (IPC)**

F25B

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 26 October 2023 | Amous, Moez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

**INCOMPLETE SEARCH
SHEET C**

Application Number

**EP 23 02 0142**

```
Claim(s) completely searchable:
        1-7, 9-12

Claim(s) not searched:
        8

Reason for the limitation of the search:

Rule 62a EPC
```

## ANNEX TO THE EUROPEAN SEARCH REPORT
## ON EUROPEAN PATENT APPLICATION NO.

EP 23 02 0142

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2023

| Patent document cited in search report | Publication date | Patent family member(s) | Publication date |
|---|---|---|---|
| EP 3051230 A1 | 03-08-2016 | NONE | |
| WO 2008094057 A2 | 07-08-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2100032408 A

- DE 278076, Altenkirch, E., & Tenckhoff, B.

**Non-patent literature cited in the description**

- **STAICOVICI M. D.** Coabsorbent and Thermal Recovery Compression Heat Pumping Technologies. Springer Verlag, 2014, 143

- **STAICOVICI M. D.** Coabsorbent and Thermal Recovery Compression Heat Pumping Technologies. Springer Verlag, 2014